# EUROPEAN PATENT APPLICATION

(11) **EP 4 475 583 A1**
(43) Date of publication of application: **11.12.2024**
(21) Application number: 22924801.8
(22) Date of filing: 03.02.2022
(51) Int. Cl.: H04W 16/28, H04W 72/04

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); SHIBAIKE, Naoya, Tokyo 100-6150 (JP); NAGATA, Satoshi, Tokyo 100-6150 (JP); WANG, Jing, Beijing 100190 (CN)
(74) Representative: Hoffmann Eitle
(86) International application number: PCT/JP2022/004294
(87) International publication number: WO 2023/148891

(57) **Abstract**

A terminal according to an aspect of the present disclosure includes a control section that performs at least one of a use of more than eight DMRS ports for a demodulation reference signal (DMRS) configuration type 1 and a use of more than 12 DMRS ports for a DMRS configuration type 2, and a receiving section that receives DMRSs for a physical downlink control channel using the DMRS ports. According to an aspect of the present disclosure, the suitable number of DMRS ports can be used.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future radio communication systems (for example, NR), a method of beam management is introduced. For example, for NR, forming (or using) beams in at least one of a base station and a user terminal (User Equipment (UE)) has been under study.

On the other hand, for layer orthogonalization or the like, a plurality of ports of references signals (for examples, demodulation reference signals (DMRS)) are used. In the future radio communication systems, the number of DMRS ports is required to increase more than existing specification. However, how to increase the DMRS ports has not been sufficiently studied. In a case that the suitable number of DMRS ports cannot be used, communication
throughput/communication quality may be degraded.

In view of these, an object of the present disclosure is to provide a terminal, a radio communication method, and a base station using the suitable number of DMSR ports.

### Solution to Problem

A terminal according to an aspect of the present disclosure includes a control section that performs at least one of a use of more than eight DMRS ports for a demodulation reference signal (DMRS) configuration type 1 and a use of more than 12 DMRS ports for a DMRS configuration type 2, and a receiving section that receives DMRSs for a physical downlink control channel using the DMRS ports.

### Advantageous Effects of Invention

According to an aspect of the present disclosure, the suitable number of DMRS ports can be used.

### Brief Description of Drawings

[FIG. 1] FIG. 1 shows an example of DMRS arrangement.
[FIG. 2] FIGS. 2A and 2B show examples of DMRS configuration types 1/2.
[FIG. 3] FIGS. 3A and 3B show examples of a single symbol DMRS.
[FIG. 4] FIGS. 4A and 4B show examples of a double symbol DMRS.
[FIG. 5] FIG. 5 shows examples of a DMRS configuration type 1 and the single symbol DMRS.
[FIG. 6] FIG. 6 shows a first example of the DMRS configuration type 1 and the double symbol DMRS.
[FIG. 7] FIG. 7 shows a second example of the DMRS configuration type 1 and the double symbol DMRS.
[FIG. 8] FIG. 8 shows a first example of a DMRS configuration type 2 and the single symbol DMRS.
[FIG. 9] FIG. 9 shows a second example of the DMRS configuration type 2 and the single symbol DMRS.
[FIG. 10] FIG. 10 shows a first example of the DMRS configuration type 2 and the double symbol DMRS.
[FIG. 11] FIG. 11 shows a second example of the DMRS configuration type 2 and the double symbol DMRS.
[FIG. 12] FIG. 12 shows a third example of the DMRS configuration type 2 and the double symbol DMRS.
[FIG. 13] FIG. 13 shows an example of parameters for a PDSCH DMRS configuration type 1.
[FIG. 14] FIG. 14 shows an example of parameters for a PUSCH DMRS configuration type 1.
[FIG. 15] FIG. 15 shows an example of FD OCC mapping for the DMRS configuration type 2 and the single symbol DMRS in embodiment #1.
[FIG. 16] FIG. 16 shows an example of FD OCC mapping for the DMRS configuration type 1 and the single symbol DMRS in embodiment #1.
[FIG. 17] FIG. 17 shows an example of a table 1 for the DMRS configuration type 1.
[FIG. 18] FIG. 18 shows an example of a table 1 for the DMRS configuration type 2.
[FIG. 19] FIG. 19 shows an example of a table 2 for the DMRS configuration type 1.
[FIG. 20] FIG. 20 shows another example of the table 2 for the DMRS configuration type 1.
[FIG. 21] FIG. 21 shows an example of a table 2 for the DMRS configuration type 2.
[FIG. 22] FIG. 22 shows another example of the table 2 for the DMRS configuration type 2.
[FIG. 23] FIGS. 23A and 23B show examples of a code A-1.
[FIG. 24] FIG. 24 shows an example of a cyclic shift for the code A-1.

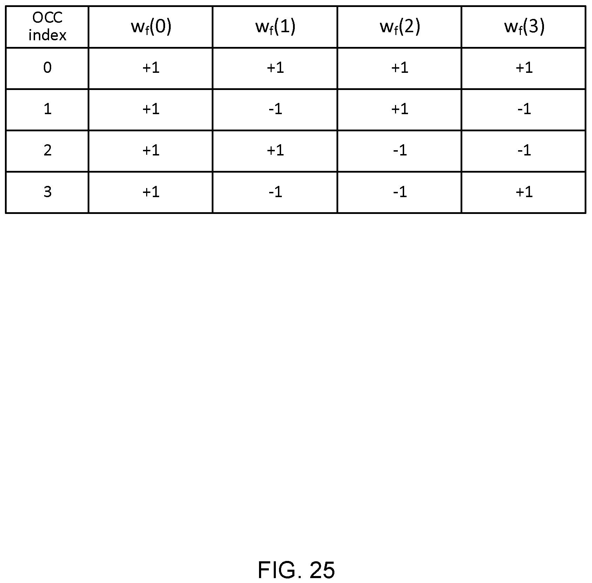

[FIG. 25] FIG. 25 shows an example of a code A-2.
[FIG. 26] FIGS. 26A and 26B show examples of a code A-3.
[FIG. 27] FIG. 27 shows an example of code A-3 mapping.
[FIG. 28] FIGS. 28A and 28B show examples of a code B-1.
[FIG. 29] FIG. 29 shows an example of a code B-2.
[FIG. 30] FIGS. 30A and 30B show examples of a code B-3.
[FIG. 31] FIG. 31 shows an example of code B-3 mapping.
[FIG. 32] FIGS. 32A and 32B show examples of a TD OCC.
[FIG. 33] FIG. 33 shows a first example of FD OCC mapping for the DMRS configuration type 2 and the single symbol DMRS in embodiment #3.
[FIG. 34] FIG. 34 shows a second example of the FD OCC mapping for the DMRS configuration type 2 and the single symbol DMRS in embodiment #3.
[FIG. 35] FIGS. 35A and 35B show examples of a longer FD OCC.
[FIG. 36] FIG. 36 shows another example of the FD OCC mapping for the DMRS configuration type 2 and the single symbol DMRS in embodiment #3.
[FIG. 37] FIG. 37 shows an example of an FD OCC having a length of 8.
[FIG. 38] FIG. 38 shows a first example of mapping of the FD OCC having the length of 8.
[FIG. 39] FIG. 39 shows a second example of the mapping of the FD OCC having the length of 8.
[FIG. 40] FIGS. 40A and 40B show examples of a TD OCC having a length of 4.
[FIG. 41] FIG. 41 shows an example of mapping of the TD OCC having the length of 4.
[FIG. 42] FIGS. 42A and 42B show examples of a configured time domain window.
[FIG. 43] FIG. 43 shows an example of an RB level comb of the single symbol DMRS.
[FIG. 44] FIG. 44 shows an example of an RB level comb of the double symbol DMRS.
[FIG. 45] FIG. 45 shows an example of an OCC according to embodiment #5.
[FIG. 46] FIG. 46 shows an example of multiplexing of a DMRS for an existing UE and a DMRS for a new UE.
[FIG. 47] FIG. 47 is a diagram to show an example of a schematic structure of a radio communication system according to one embodiment.
[FIG. 48] FIG. 48 is a diagram to show an example of a structure of a base station according to one embodiment.
[FIG. 49] FIG. 49 is a diagram to show an example of a structure of a user terminal according to one embodiment.
[FIG. 50] FIG. 50 is a diagram to show an example of a hardware structure of the base station and the user terminal according to one embodiment.
[FIG. 51] FIG. 51 is a diagram to show an example of a vehicle according to one embodiment.

### Description of Embodiments

### (Beam Management)

In NR, a method of beam management is introduced. For example, for NR, forming (or using) beams in at least one of a base station and a UE has been under study.

Through application of beam forming (BF), it is expected that difficulty in securing coverage due to increase in carrier frequency be reduced, and radio wave propagation loss be reduced.

BF is, for example, a technique in which a beam (antenna directivity) is formed by controlling (also referred to as precoding) amplitude/phase of a signal that is transmitted or received from each element by using an ultra multi-element antenna. Note that Multiple Input Multiple Output (MIMO) using such an ultra multi-element antenna is also referred to as massive MIMO.

Sweeping of beams may be performed in both of transmission and reception to perform control so that an appropriate pair is selected out of candidates of a plurality of patterns of transmit and receive beam pairs. The pair of the transmit beam and the receive beam may be referred to as a beam pair and may be identified as a beam pair candidate index.

Note that, in beam management, a single beam is not used, and a plurality of levels of beam control, such as a rough beam and a fine beam, may be performed.

BF can be categorized into digital BF and analog BF. Digital BF and analog BF may be referred to as digital precoding and analog precoding, respectively.

Digital BF is, for example, a method in which precoding signal processing is performed on a baseband (for a digital signal). In this case, as many parallel processings, such as inverse fast Fourier transform (IFFT), digital to analog conversion (Digital to Analog Converter (DAC)), and Radio Frequency (RF), as the number of antenna ports (or RF chains) are required. At the same time, as many beams as the number of RF chains can be formed at any timing.

Analog BF is, for example, a method in which a phase shifter is used in RF. In analog BF, a plurality of beams cannot be formed at the same timing; however, a configuration thereof is easy and can be implemented at a low cost because it is only necessary that phase of RF signals be rotated.

Note that a hybrid BF configuration, which is a combination of digital BF and analog BF, can be implemented as well. In NR, introduction of massive MIMO has been under study. When forming of a great number of beams is intended to be performed by means of only digital BF, however, a circuit configuration costs much. Thus, use of the hybrid BF configuration is also assumed.

### (TCI, Spatial Relation, QCL)

For NR, control of reception processing (for example, at least one of reception, demapping, demodulation, and decoding) and transmission processing (for example, at least one of transmission, mapping, precoding, modulation, and coding) of at least one of a signal and a channel (which may be referred to as a signal/channel; hereinafter, in a similar manner, "A/B" may be interpreted as "at least one of A and B") based on a transmission configuration indication state (TCI state) has been under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information (SRI), or the like. The TCI state may be configured for the UE for each channel or for each signal.

QCL is an indicator indicating statistical properties of the signal/channel. For example, when a given signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A: Doppler shift, Doppler spread, average delay, and delay spread
- QCL type B: Doppler shift and Doppler spread
- QCL type C: Doppler shift and Average delay
- QCL type D: Spatial reception parameter

Types A to C may correspond to QCL information related to synchronization processing of at least one of time and frequency, and type D may correspond to QCL information related to beam control.

A case that the UE assumes that a given control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (or a reference signal (RS) for the channel) and another signal (for example, another downlink reference signal (DL-RS)). The TCI state may be configured (indicated) by higher layer signaling or physical layer signaling, or a combination of these.

In the present disclosure, the higher layer signaling may be, for example, any one or combinations of Radio Resource Control (RRC) signaling, Medium Access Control (MAC) signaling, broadcast information, and the like.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

The physical layer signaling may be, for example, downlink control information (DCI).

A channel for which the TCI state is configured (indicated) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS (DL-RS) to have a QCL relationship with the channel may be, for example, at least one of a synchronization signal block (SSB), a channel state information reference signal (CSI-RS), and a reference signal for measurement (Sounding Reference Signal (SRS)). Alternatively, the DL-RS may be a CSI-RS used for tracking (also referred to as a Tracking Reference Signal (TRS)), or a reference signal used for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An information element of the TCI state ("TCI-state IE" of RRC) configured using higher layer signaling may include one or a plurality of pieces of QCL information ("QCL-Info"). The QCL information may include at least one of information related to the DL-RS to have a QCL relationship (DL-RS relation information) and information indicating a QCL type (QCL type information). The DL-RS relation information may include information such as an index of the DL-RS (for example, an SSB index, or a non-zero power CSI-RS (NZP CSI-RS) resource ID (Identifier)), an index of a cell in which the RS is located, and an index of a Bandwidth Part (BWP) in which the RS is located.

### (MIMO Technology Progress and Beam)

Here, MIMO technology has been utilized in a frequency band lower than 6 GHz, but is studied to be also applied to a frequency band higher than 6 GHz in the future.

Note that the frequency band lower than 6 GHz may be referred to as sub-6, a frequency range (FR)) 1, or the like. The frequency band higher than 6 GHz may be referred to as above-6, an FR2, a millimeter wave (mmW), an FR4, or the like.

The maximum number of MIMO layers is assumed to be restricted by an antenna size.

It is expected that high order MIMO is utilized even in the mmW, and a plurality of UEs collaborate with each other so that a degree of freedom and diversity of MIMO multiplexing are improved to improve throughput.

As described above, in the future radio communication systems (for example, Rel-17 or later versions NR), it is assumed that an operation using only the digital beam without using the analog beam (which may be referred to as a full digital operation) is utilized even in high frequency (for example, FR2), or an operation dominantly using the digital beam is utilized.

For example, in a case of the full digital operation, frequency use efficiency can be expected to be improved by applying orthogonal precoding (or orthogonal beam, digital beam) simultaneously to a plurality of UEs. In a case that a digital beam cannot be appropriately applied, an interference between the UEs increases to lead to degradation of the communication quality (or cell capacity reduction). Note that "orthogonal" in the present disclosure may be interpreted as "semi-orthogonal".

In a case that the base station (which may be interpreted as a transmission/reception point (TRP), a panel, or the like) can transmit only one beam in a given time period, the base station switches, and transmits and receives a beam for the UEs. In a case that the base station can transmit a plurality of beams in a given time period, the base station can simultaneously uses different beams to transmit and receive to and from a plurality of UE.

Even if the base station is in the full digital operation, the Rel-15 UE should be accommodated (supported) so long as the Rel-15 UE exists.

### (DMRS)

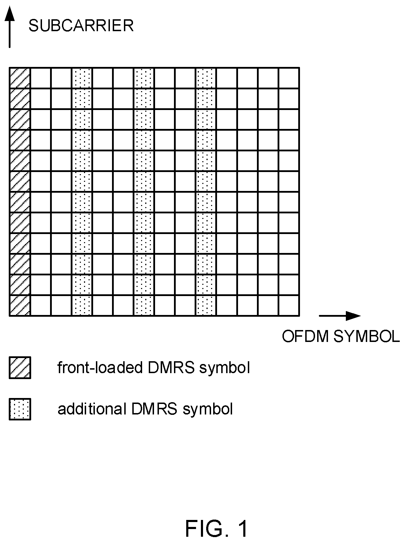

A front-loaded DMRS is the first DMRS (of the first symbol or near the first symbol) for earlier demodulation. An additional DMRS is can be configured for a high speed moving UE or a high modulation and coding scheme (MCS)/rank by RRC (FIG. 1). A frequency position of the additional DMRS is the same as the front-loaded DMRS.

A DMRS mapping type A or B is configured for the time domain. In the DMRS mapping type A, a DMRS position l_0 is counted by a symbol index in a slot. l_0 is configured by a parameter (dmrs-TypeA-Position) in a MIB or common serving cell configuration (ServingCellConfigCommon). A DMRS position 0 (reference point l) means the first symbol of a slot or each frequency hop. In the DMRS mapping type B, the DMRS position l_0 is counted by a symbol index in a PDSCH/PUSCH. l_0 is always 0. The DMRS position 0 (reference point l) means the first symbol of a PDSCH/PUSCH or each frequency hop.

The DMRS position is defined by a table in the specification, and depends on a PDSCH/PUSCH duration. A position of the additional DMRS is fixed.

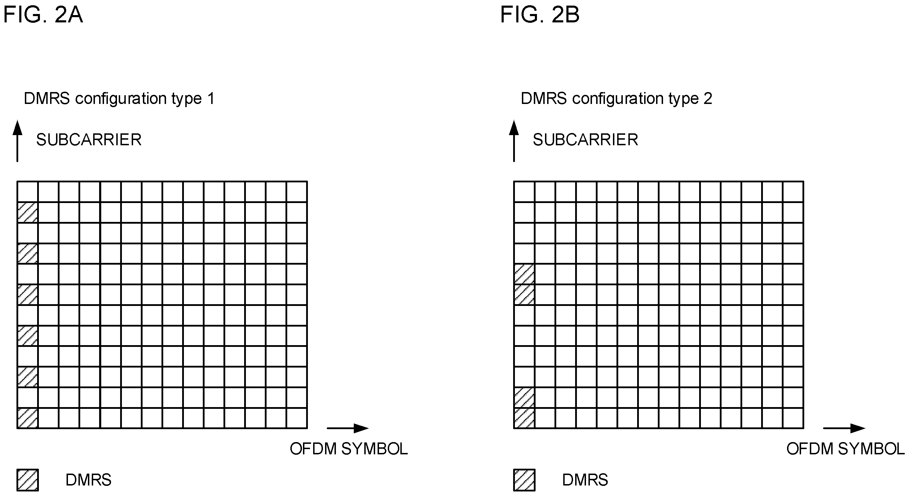

A DMRS configuration type 1 or 2 is configured for the frequency domain. The DMRS configuration type 1 has a comb structure, and is applicable to both CP-OFDM (transport precoding = disabled) and DFT-S-OFDM (transport precoding = enabled). The DMRS configuration type 2 is applicable only to the CP-OFDM. FIG. 2A shows an example of the DMRS configuration type 1. FIG. 2B shows an example of the DMRS configuration type 2.

A single symbol DMRS or a double symbol DMRS is configured.

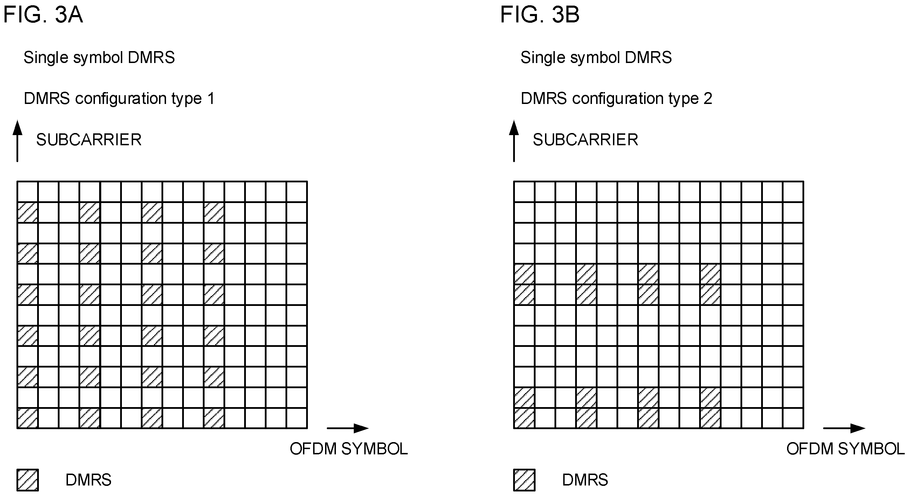

The single symbol DMRS is normally used (mandatory in Rel. 15). In the single symbol DMRS, the number of additional DMRSs (symbols) is {0, 1, 2, 3}. The single symbol DMRS supports both cases that the frequency hopping is enabled and disabled. In a case that the maximum number (maxLength) in an uplink DMRS configuration (DMRS-UplinkConfig) is not configured, the single symbol DMRS used. FIG. 3A shows an example of the single symbol DMRS of the DMRS configuration type 1 (the number of additional DMRSs = 3). FIG. 3B shows an example of the single symbol DMRS of the DMRS configuration type 2 (the number of additional DMRSs = 3).

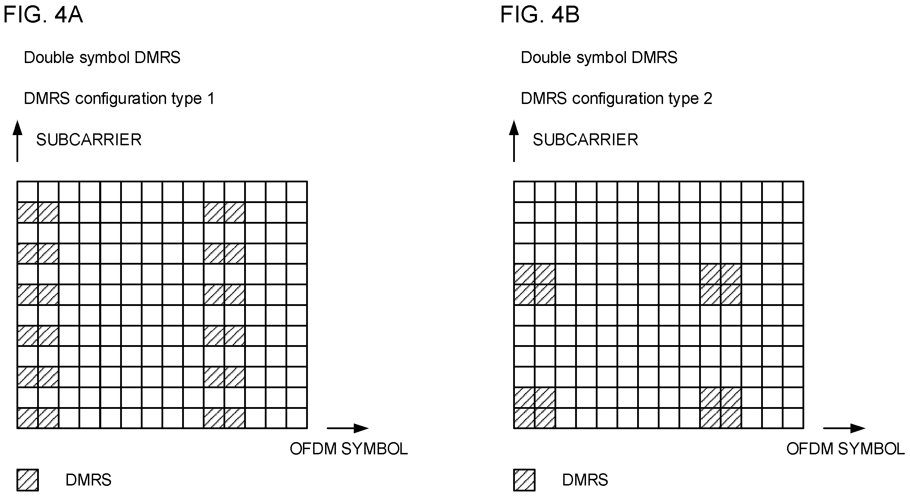

The double symbol DMRS is used for more DMRS ports (particularly, MU-MIMO). In the double symbol DMRS, the number of additional DMRSs (symbols) is {0, 1}. The double symbol DMRS supports the case that frequency hopping is disabled. In a case that the maximum number (maxLength) in the uplink DMRS configuration (DMRS -UplinkConfig) is 2 (len2), whether the single symbol DMRS or the double symbol DMRS is used is determined by DCI or a configured grant. FIG. 4A shows an example of the double symbol DMRS of the DMRS configuration type 1 (the number of additional DMRSs = 1). FIG. 4B shows an example of the double symbol DMRS of the DMRS configuration type 2 (the number of additional DMRSs = 1).

From the description above, possible configuration patterns of the DMRS may be combinations below.
- DMRS configuration type 1, DMRS mapping type A, single symbol DMRS
- DMRS configuration type 1, DMRS mapping type A, double symbol DMRS
- DMRS configuration type 1, DMRS mapping type B, single symbol DMRS
- DMRS configuration type 1, DMRS mapping type B, double symbol DMRS
- DMRS configuration type 2, DMRS mapping type A, single symbol DMRS
- DMRS configuration type 2, DMRS mapping type A, double symbol DMRS
- DMRS configuration type 2, DMRS mapping type B, single symbol DMRS
- DMRS configuration type 2, DMRS mapping type B, double symbol DMRS

A plurality of DMRS ports mapped to the same RE (time and frequency resources) are referred to as a DMRS CDM group.

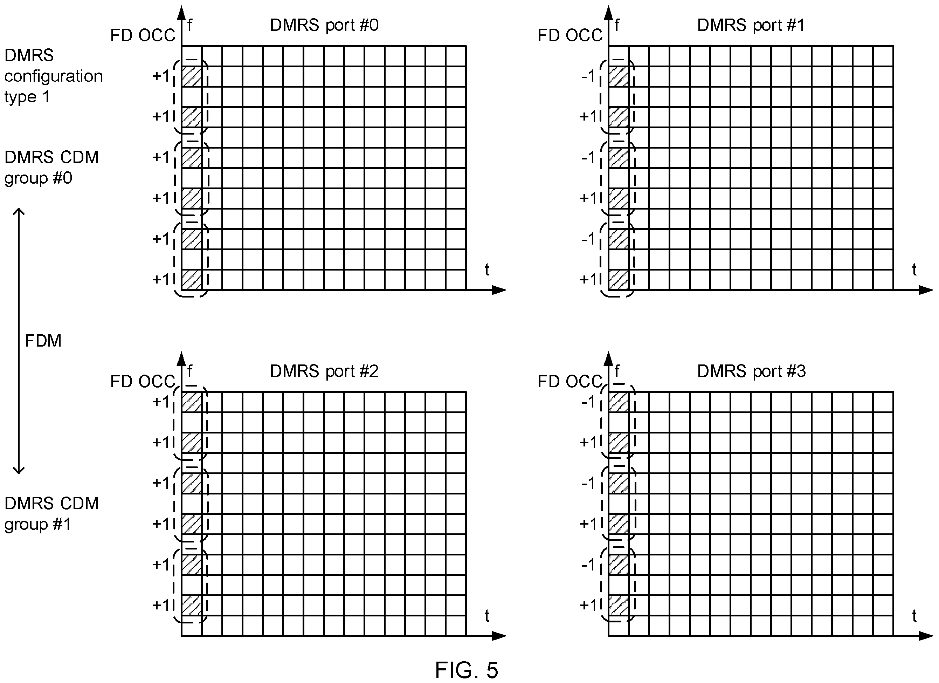

Four DMRS ports can be used for the DMRS configuration type 1 and the single symbol DMRS. Two DMRS ports are multiplexed in each DMRS CDM group by an FD OCC having a length of 2. Two DMRS ports are multiplexed between a plurality of DMRS CDM groups (two DMRS CDM groups) by FDM (FIG. 5).

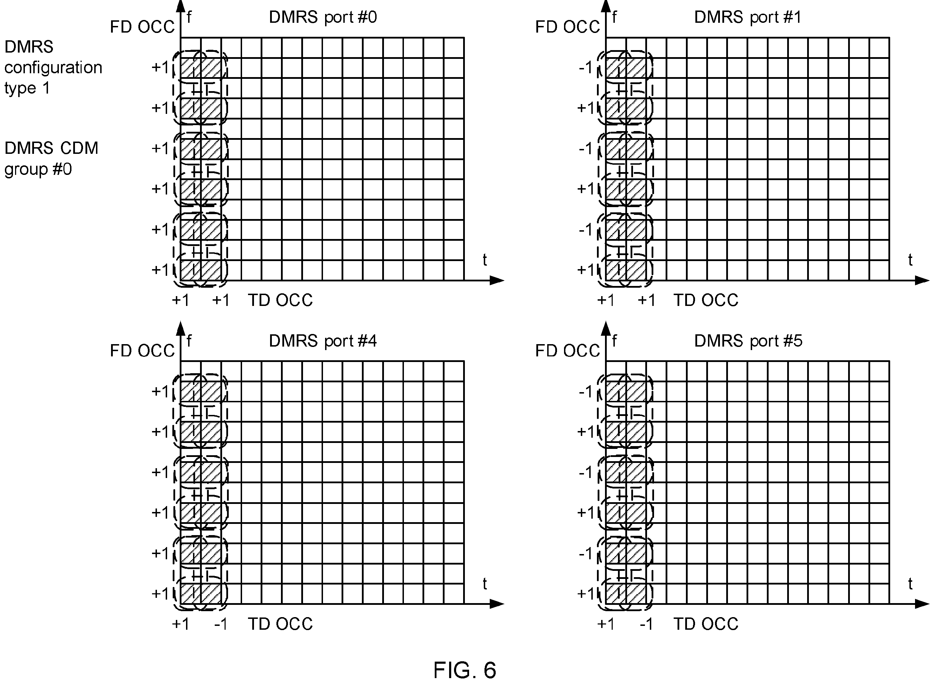

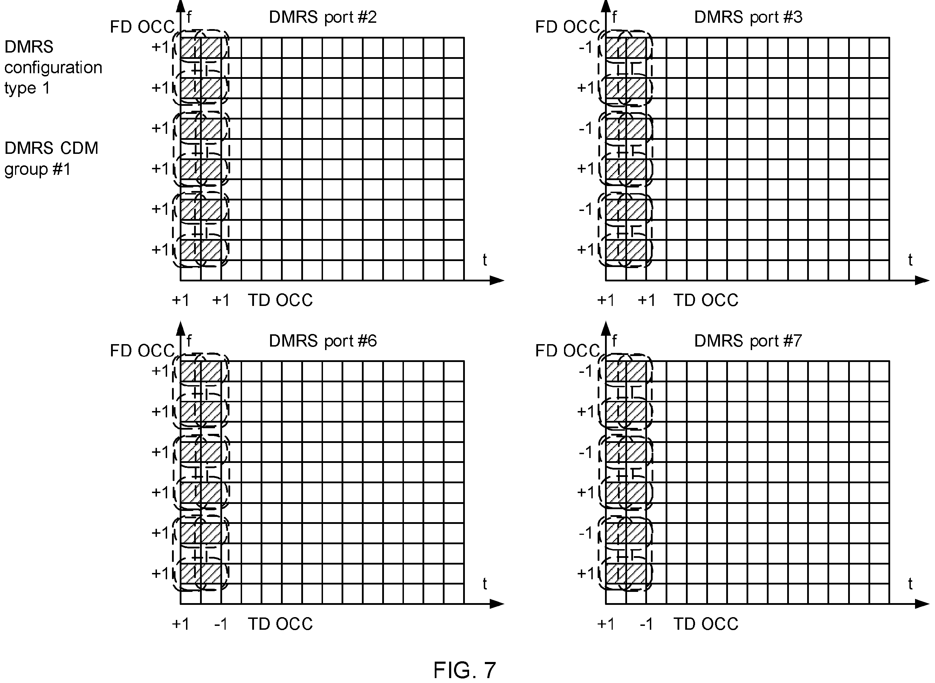

Eight DMRS ports can be used for the DMRS configuration type 1 and the double symbol DMRS. Two DMRS ports are multiplexed in each DMRS CDM group by an FD OCC having a length of 2, and two DMRS ports are multiplexed by a TD OCC. Two DMRS ports are multiplexed between a plurality of DMRS CDM groups (two DMRS CDM groups) by FDM (FIGS. 6 and 7).

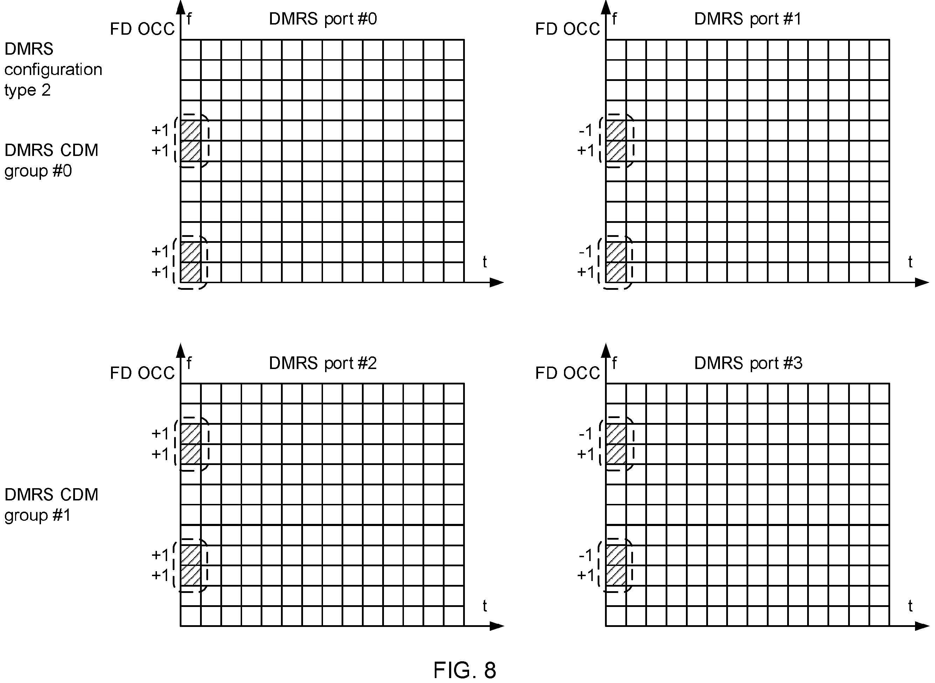

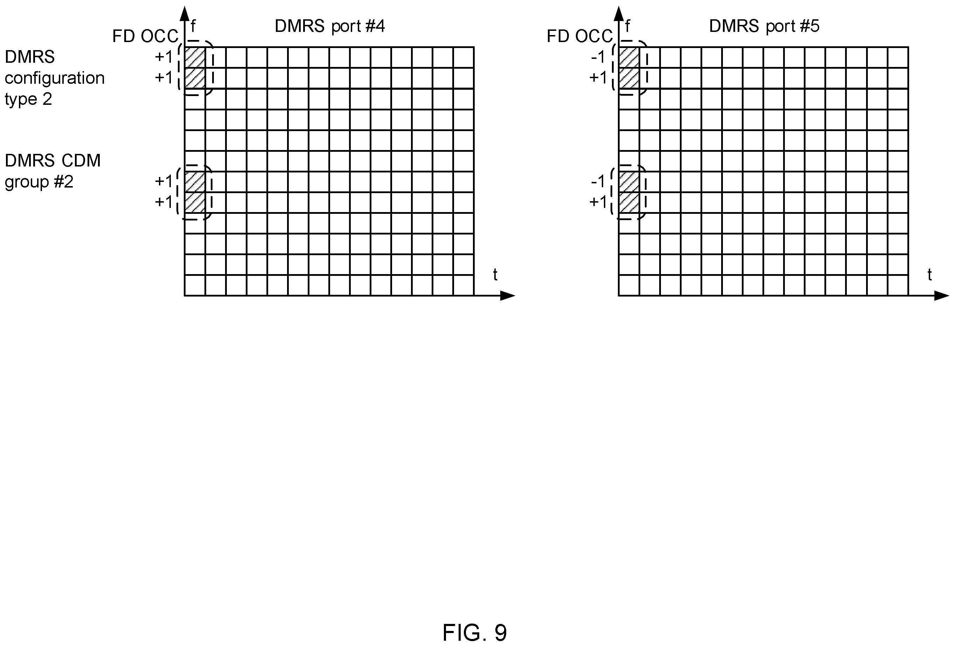

Six DMRS ports can be used for the DMRS configuration type 2 and the single symbol DMRS. Two DMRS ports are multiplexed in each DMRS CDM group by an FD OCC having a length of 2. Three DMRS ports are multiplexed between a plurality of DMRS CDM groups (three DMRS CDM groups) by FDM (FIGS. 8 and 9).

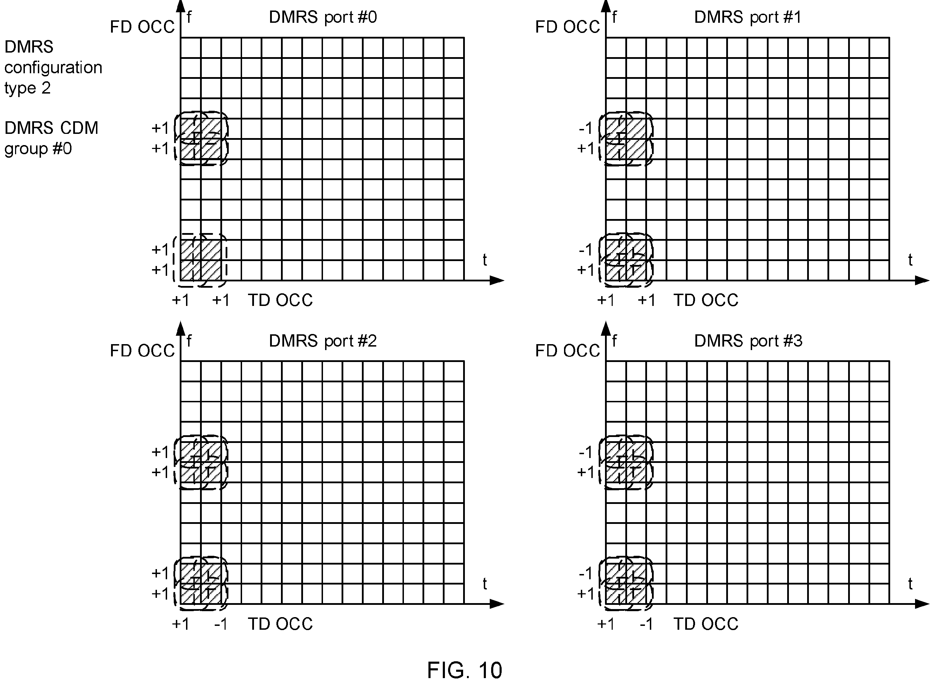

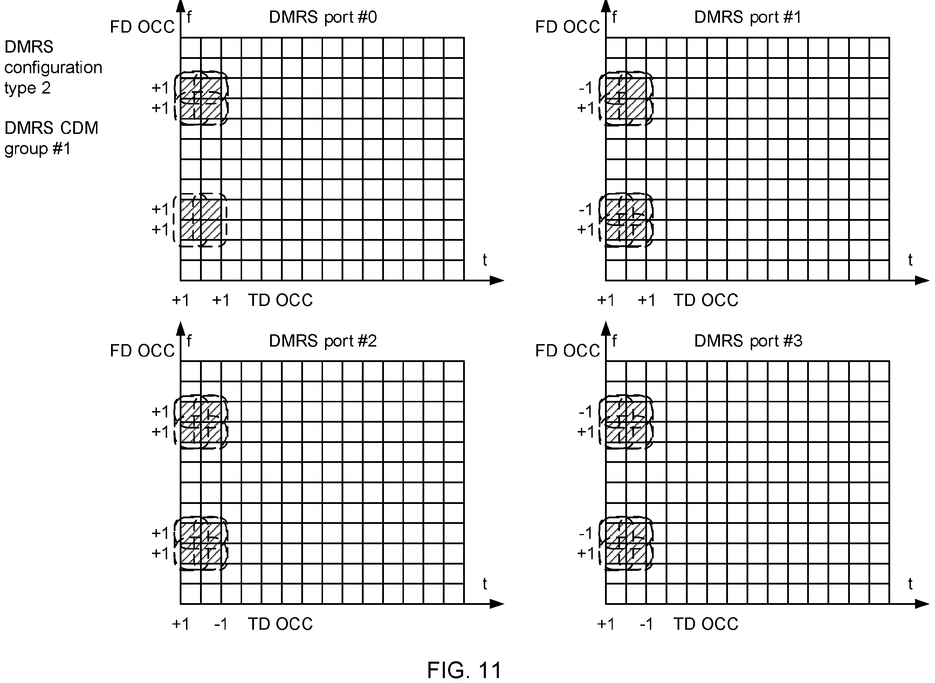

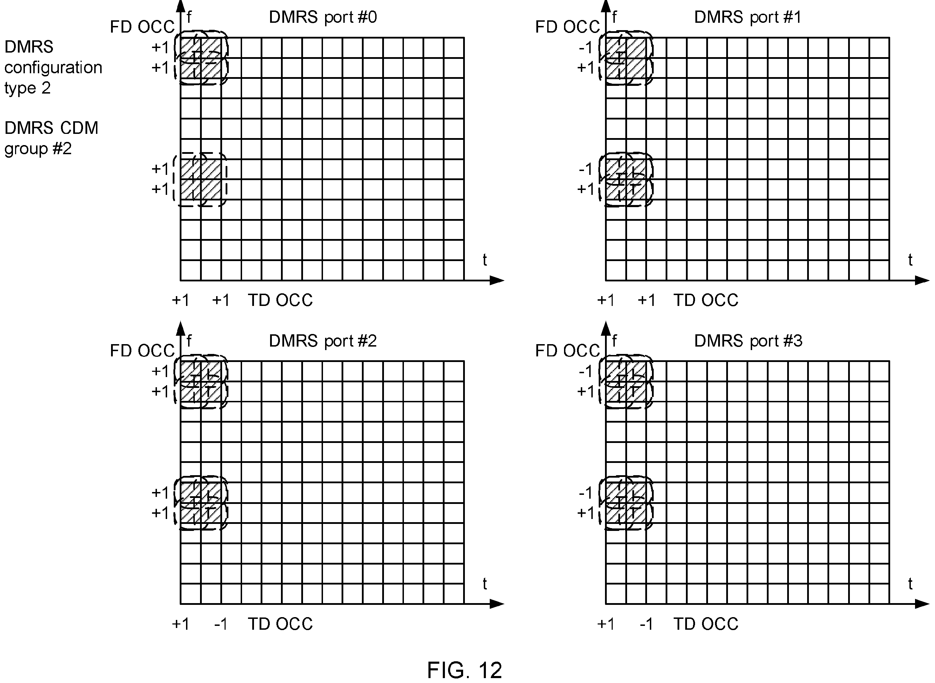

12 DMRS ports can be used for the DMRS configuration type 2 and the double symbol DMRS. Two DMRS ports are multiplexed in each DMRS CDM group by an FD OCC having a length of 2, and two DMRS ports are multiplexed by a TD OCC. Three DMRS ports are multiplexed between a plurality of DMRS CDM groups (three DMRS CDM groups) by FDM (FIGS. 10, 11, and 12).

The example of the DMRS mapping type B is shown here, but is similarly applied to the DMRS mapping type A.

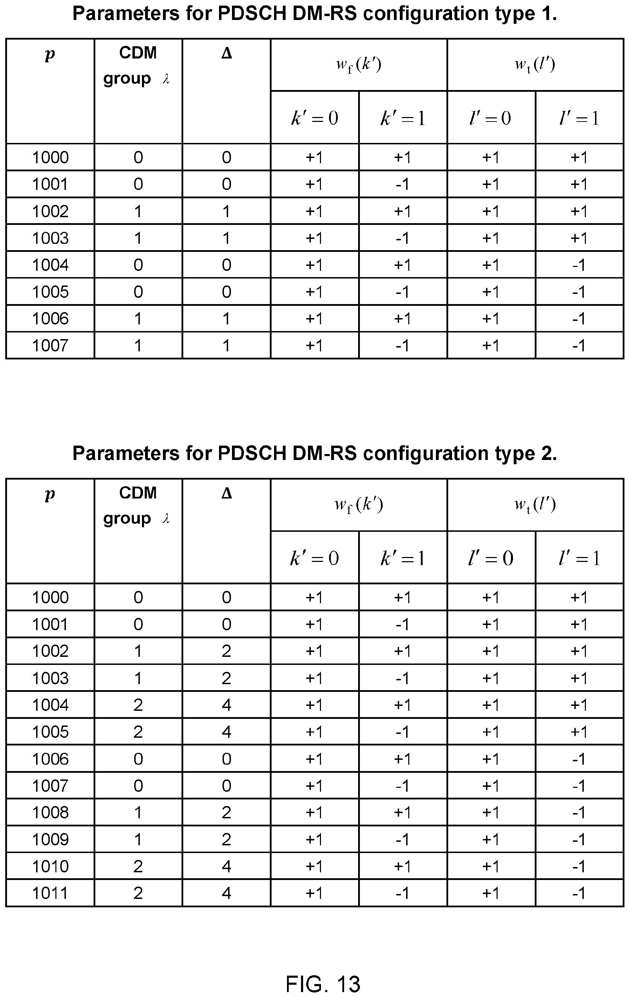

In parameters for a PDSCH DMRS (FIG. 13), DMRS ports 1000-1007 can be used for the DMRS configuration type 1, and DMRS ports 1000-1011 can be used for the DMRS configuration type 2.

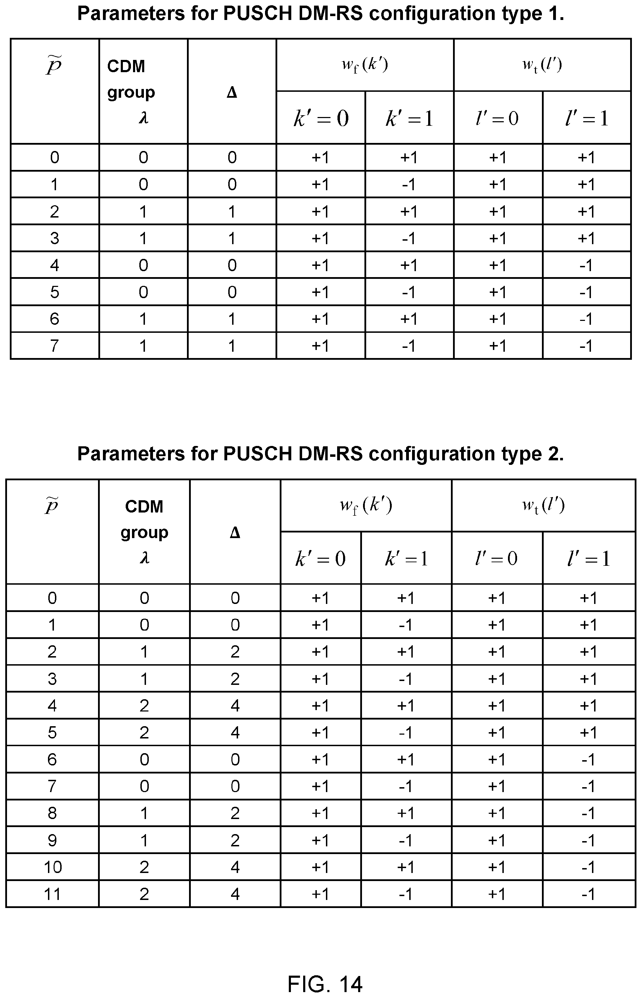

In parameters for a PUSCH DMRS (FIG. 14), DMRS ports 0-7 can be used for the DMRS configuration type 1, and DMRS ports 0-11 can be used for the DMRS configuration type 2.

### (Reference Signal Port)

For MIMO layer orthogonalization, a plurality of ports of references signals (for examples, demodulation reference signals (DMRS), CSI-RS) are used.

For example, a DMRS port/CSI-RS port different per layer may be configured for single user MIMO (SU-MIMO). A DMRS port/CSI-RS port different per layer in one UE and per UE may be configured for multi user MIMO (MU-MIMO).

Note that use of the number of CSI-RS ports which has a value greater than the number of layers used for data allows more accurate measurement of a channel state based on this CSI-RS, and is expected to contribute to throughput improvement.

In Rel-15 NR, a plurality of ports of DMRS are supported with frequency division multiplexing (FDM), frequency domain orthogonal cover code (FD-OCC), time domain OCC (TD-OCC) or the like, specifically up to eight ports for type 1 DMRS (in other words, DMRS configuration type 1) and up to 12 ports for type 2 DMRS (in other words, DMRS configuration type 2) are supported.

In Rel-15 NR, a comb-shaped transmission frequency pattern (comb-shaped resource set) is used as the FDM described above. A cyclic shift (CS) is used as the FD-OCC described above. The TD-OCC described above can be applied only to the double symbol DMRS.

The OCC according to the present disclosure may be interpreted as orthogonal code, orthogonalization, cyclic shift, or the like.

Note that a DMRS type may be referred to as a DMRS configuration type.

Of the DMRS, a DMRS subjected to resource-mapping in units of two continuous (adjacent) symbols may be referred to a double symbol DMRS, and a DMRS subjected to resource-mapping in units of one symbol may be referred to as a single symbol DMRS.

Both DMRSs may be mapped to one or more symbols per one slot depending on a length of a data channel. A DMRS mapped to a start position of the data symbol may be referred to a front-loaded DMRS, and a DMRS additionally mapped to another position may be referred to as an additional a DMRS.

In a case of the DMRS configuration type 1 and the single symbol DMRS, the Comb and the CS may be utilized for the orthogonalization. For example, two types of Combs and two types of CSs (Comb2 + 2CS) may utilized to support up to four antenna ports (APs).

In a case of the DMRS configuration type 1 and the double symbol DMRS, the Comb, the CS, and the TD-OCC may be utilized for the orthogonalization. For example, two types of Combs, two types of CSs, and a TD-OCC ({1, 1} and {1, -1}) may be used to support up to eight APs.

In a case of the DMRS configuration type 2 and the single symbol DMRS, the FD-OCC may be utilized for the orthogonalization. For example, an orthogonal code (2-FD-OCC) may be applied to two resource elements (REs) adjacent to each other in a frequency direction to support up to six APs.

In a case of the DMRS configuration type 2 and the double symbol DMRS, the FD-OCC and the TD-OCC may be utilized for the orthogonalization. For example, the orthogonal code (2-FD-OCC) may be applied to two REs adjacent in the frequency direction and the TD-OCC ({1, 1} and {1, -1}) may be applied to two REs adjacent in a time direction to support up to 12 APs.

In Rel-15 NR, a plurality ports of CSI-RS are supported with FDM, time division multiplexing (TDM), frequency domain OCC, time domain OCC, or the like, up to 32 ports are supported. The scheme similar to that for the DMRS may be also applied to orthogonalization of the CSI-RS.

Here, a DMRS port group orthogonalized by the FD-OCC/TD-OCC as described above may be referred to as a code division multiplexing CDM) group.

Different CDM groups, which are FDMed, are orthogonal to each other. On the other hand, in the same CDM group, orthogonality of the applied OCC may be broken due to channel variation or the like. In this case, if signals in the same CDM group are received with different received powers, a near-far problem may occur so that the orthogonality may not be secured.

Here, the TD-OCC/FD-OCC for DMRS in Rel-15 NR will be described. The DMRS mapped to the resource element (RE) may correspond to a sequence obtained by multiplying a DMRS sequence by an FD-OCC parameter (also referred to as a sequence element or the like) w_{f}(k') and a TD-OCC parameter (also referred to as a sequence element or the like) wₜ(l').

Both the TD-OCC and FD-OCC for DMRS in Rel-15 NR correspond to an OCC having a sequence length (also referred to as an OCC length) = 2. For this reason, possible values of both k' and l' described above are 0 and 1. Multiplying this FD-OCC in units of RE allows two ports of DMRSs to be multiplexed using the same time and frequency resource resources (2 REs). Applying both the FD-OCC and TD-OCC allows four posts of DMRSs to be multiplexed using the same time and frequency resources (4 REs).

Two tables in FIG. 13 described above correspond to the DMRS configuration types 1 and 2, respectively. Note that p represents an antenna port number and Δ represents a parameter for shifting (offsetting) a frequency resource.

For example, the antenna ports 1000 and 1001 are orthogonalized using the FD-OCC by applying {w_{f}(0), w_{f}(1)} = {+1, +1} and {w_{f}(0), w_{f}(1)} = {+1, -1}, respectively.

The antenna ports 1000 and 1001 and the antenna ports 1002 and 1003 (additionally, the antenna ports 1004 and 1005 in the case of the type 2), to which different values of Δ are applied, are subjected to FDM. Thus, the antenna ports 1000 to 1003 (or 1000 to 1005) corresponding to the single symbol DMRS are orthogonalized using the FD-OCC and FDM.

The antenna ports 1000 to 1003 and antenna ports 1004 to 1007 of the type 1 are orthogonalized using the TD-OCC by applying {wₜ(0), wₜ(1)} = {+1, +1} and {wₜ(0), wₜ(1)} = {+1, -1}, respectively. Thus, the antenna ports 1000 to 1007 (or 1000 to 1011) corresponding to the double symbol DMRS are orthogonalized using the FD-OCC, the TD-OCC, and FDM.

In Rel. 15, the total number of DMRS ports in the single symbol DMRS of the (PDSCH DMRS) configuration type 1 is 2 (using comb/FDM) x 2 (using FD OCC) = 4 ports. In Rel. 15, the total number of DMRS ports in the double symbol DMRS of the (PDSCH DMRS) configuration type 1 is 2 (using comb/FDM) x 2 (using FD OCC) x 2 (using TD OCC) = 8 ports.

In Rel. 15, the total number of DMRS ports in the single symbol DMRS of the (PDSCH DMRS) configuration type 2 is 3 (using FDM) x 2 (using FD OCC) = 6 ports. In Rel. 15, the total number of DMRS ports in the double symbol DMRS of the (PDSCH DMRS) configuration type 2 is 3 (using comb) x 2 (using FD OCC) x 2 (using TD OCC) = 12 ports.

A study is underway to define the number of more orthogonalized DMRS ports for DL/UL MU-MIMO without accreting a DMRS overhead, and double the maximum number of DMRS ports for both the single symbol DMRS and the double symbol DMRS.

Problems include how to increase the total number of DMRS ports, whether to consider different methods for PDSCH and PUSCH, and the like, while suppressing the DMRS overhead. However, such problems has not been sufficiently studied. In a case that a suitable DMRS port cannot be used, communication throughput/communication quality may be degraded.

Thus, the inventors of the present invention came up with the idea of a method of the CSI configuration/report for CJT.

Embodiments according to the present disclosure will be described in detail with reference to the drawings as follows. Note that the following embodiments (for examples, cases) may be used individually, or at least two thereof may be applied in combination.

In the present disclosure, "A/B" and "at least one of A and B" may be interchangeably interpreted. Note that in the present disclosure, "A/B/C" may refer to "at least one of A, B, and C".

In the present disclosure, activate, deactivate, indicate (or specify), select, configure, update, determine, and the like may be interchangeably interpreted. In the present disclosure, support, control, controllable, operate, and operable may be interchangeably interpreted.

In the present disclosure, radio resource control (RRC), RRC parameter, RRC message, higher layer parameter, information element (IE), configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, DMRS port group), a group (for example, a spatial relation group, code division multiplexing (CDM) group, a reference signal group, a CORESET group, a Physical Uplink Control Channel (PUCCH) group, a PUCCH resource group), a resource (for example, reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, a quasi-co-location (QCL), a QCL assumption and the like may be interchangeably interpreted.

In the present disclosure, time domain resource allocation and time domain resource assignment may be interchangeably interpreted.

### (Radio Communication Method)

In each embodiment, DMRS, DL DMRS, UL DMRS, PDSCH DMRS, and PUSCH DMRS may be interchangeably interpreted.

In each embodiment, orthogonal sequence, OCC, FD OCC, and TD OCC may be interchangeably interpreted.

In each embodiment, joint channel estimation, and DMRS bundling may be interchangeably interpreted.

The figures in each embodiment mainly show the PDSCH DMRS (DMRS ports 1000 to 10xx), but each embodiment can be applied to the PUSCH DMRS (DMRS ports 0 to xx) .

### <Embodiment #0>

This embodiment relates to increase in the DMRS port.

The DRMS configuration may comply with at least one of options 0-1 to 0-3 below.

### [Option 0-1]

Both the DMRS configuration types 1 and 2 are extended. The total number of DMRS ports may be increased (for example, double) in both the DMRS configuration types 1 and 2.

### [Option 0-2]

The DMRS configuration type 2 only is extended. The total number of DMRS ports may be increased (for example, double) in the DMRS configuration type 2. The DMRS configuration type 2 is more preferable for the number of more DMRS ports.

### [Option 0-3]

The DMRS configuration type 1 only is extended. The total number of DMRS ports may be increased (for example, double) only in the DMRS configuration type 1. The DMRS configuration type 1 has higher performance due to higher DMRS density in the frequency domain. The DMRS configuration type 1 is a mandatory function without capability report, and is widely used in current networks.

According to this embodiment, the UE can use the number of more DMRS ports.

### <Embodiment #1>

This embodiment relates to the FD OCC in one PRB.

An FD OCC in one PRB in one slot/sub-slot/PDSCH/PUSCH may be defined.

In FD OCC mapping for the DMRS configuration type 2 and the single symbol DMRS in Rel. 15 (FIG. 8 described above), the FD OCC the FD OCC has a length of 2 and is mapped to two continuous subcarriers (2 RE).

The FD OCC may be applied across more than two RE (subcarriers) or all the RE in one PRB.

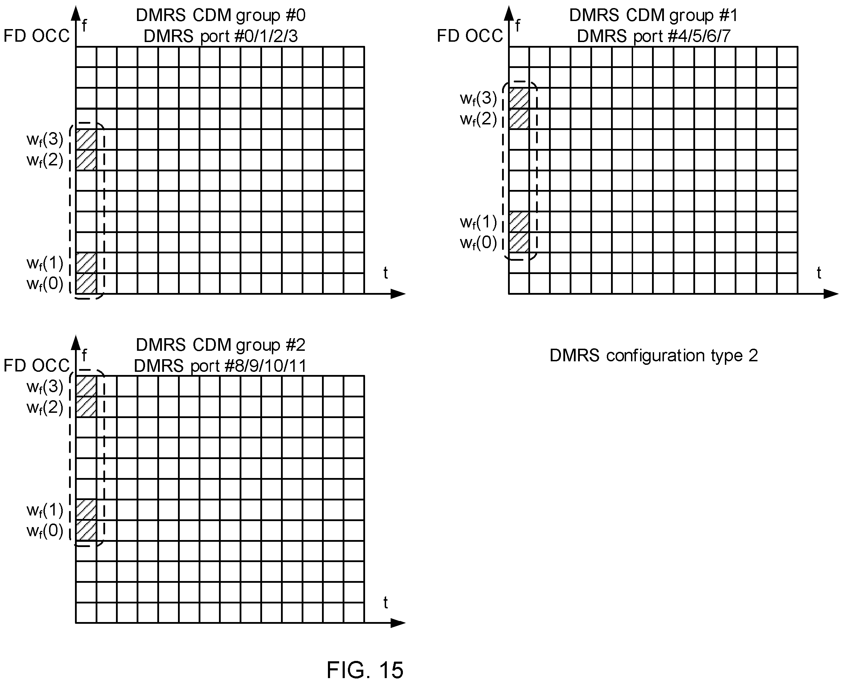

FIG. 15 shows an example of the FD OCC mapping for the DMRS configuration type 2 and the single symbol DMRS in embodiment #1. In this example, the FD OCC has a length of 4 and is mapped to four discontinuous subcarriers (4 REs).

In FD OCC mapping for the DMRS configuration type 1 and the single symbol DMRS in Rel. 15 (FIG. 5 described above), the FD OCC has a length of 2 and is mapped two discontinuous subcarriers (2 RE).

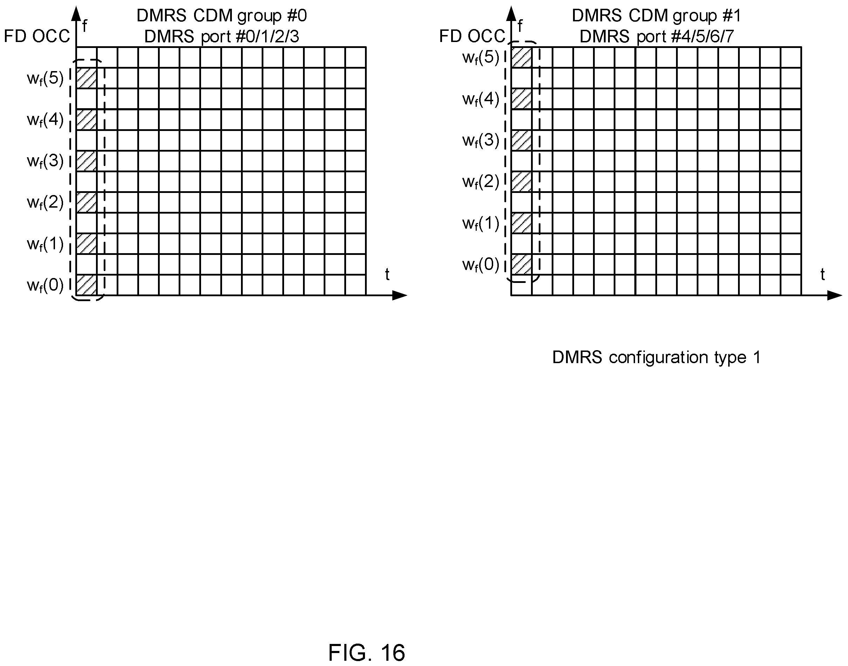

FIG. 16 shows an example of the FD OCC mapping for the DMRS configuration type 1 and the single symbol DMRS in embodiment #1. In this example, the FD OCC has a length of 6 and is mapped to six discontinuous subcarriers (6 RE).

Additional TD OCC (length of 2) may be added for the double symbol DMRS.

### <<Embodiment #1-1>>

This embodiment relates to a DMRS port table (association between DMRS parameter, DMRS port, and parameter.

The UE may select a new table (DMRS port table) for DMRS port decision based on a higher layer configuration. In a case that the higher layer configures new DMRS ports (the number of which is more than the number of existing DMRS ports), the UE may select the new DMRS port table.

A new DMRS port table for the DMRS configuration type 1 and a new DMRS port table for the DMRS configuration type 2 may be defined. In a case that the DMRS configuration type 1 and a higher layer parameter for the new DMRS port are configured, the UE may use the new DMRS port table for the DMRS configuration type 1, or in a case that the DMRS configuration type 1 is configured and a higher layer parameter for the new DMRS port is not configured, the UE may use the existing DMRS port table for the DMRS configuration type 1 (DMRS port table defined in Rel. 15). In a case that the DMRS configuration type 2 and a higher layer parameter for the new DMRS port are configured, the UE may use the new DMRS port table for the DMRS configuration type 2, or in a case that the DMRS configuration type 2 is configured and a higher layer parameter for the new DMRS port is not configured, the UE may use the existing DMRS port table for the DMRS configuration type 2 (DMRS port table defined in Rel. 15).

The new DMRS port table may comply with any of tables 1 and 2 descried below.

### [Table 1]

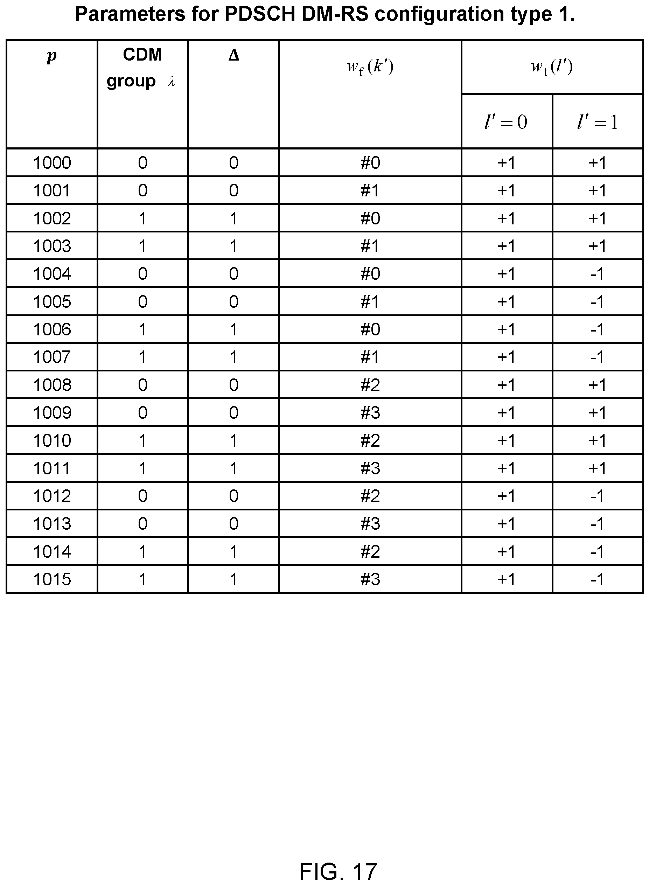

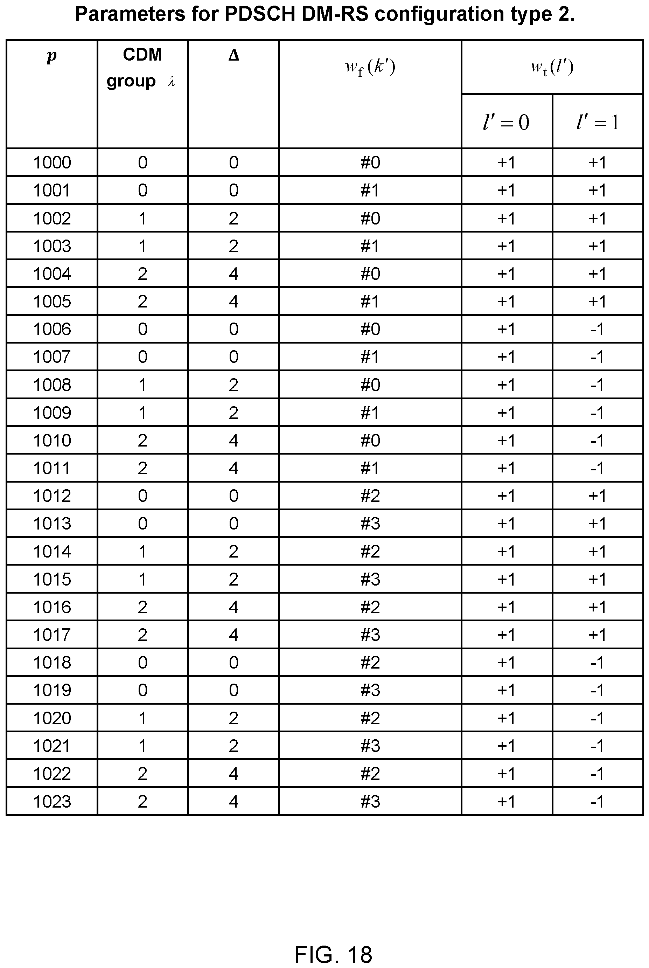

FIG. 17 shows an example of the table 1 for the DMRS configuration type 1. FIG. 18 shows an example of the table 1 for the DMRS configuration type 2. In the new DMRS port table, an entry (including at least one of the CDM group, Δ, the FD OCC, and the TD OCC) for an existing DMRS port index (1000 to 1007 for the DMRS configuration type 1, and 1000 to 1011 for the DMRS configuration type 2) is not changed. In the new DMRS port table, an entry for a new DMRS port index is added.

According to this new DMRS port table, the specification and UE/base station implementation can be simplified.

### [Table 2]

In the new DMRS port table, the entry (including at least one of the CDM group, Δ, the FD OCC, and the TD OCC) for the existing DMRS port index (1000 to 1007 for the DMRS configuration type 1, and 1000 to 1011 for the DMRS configuration type 2) is changed. The number of more continuous DMRS port indices can be assigned to the same CDM group. A plurality of DMRS ports in the same CDM group can be assigned to one UE in the MU-MIMO.

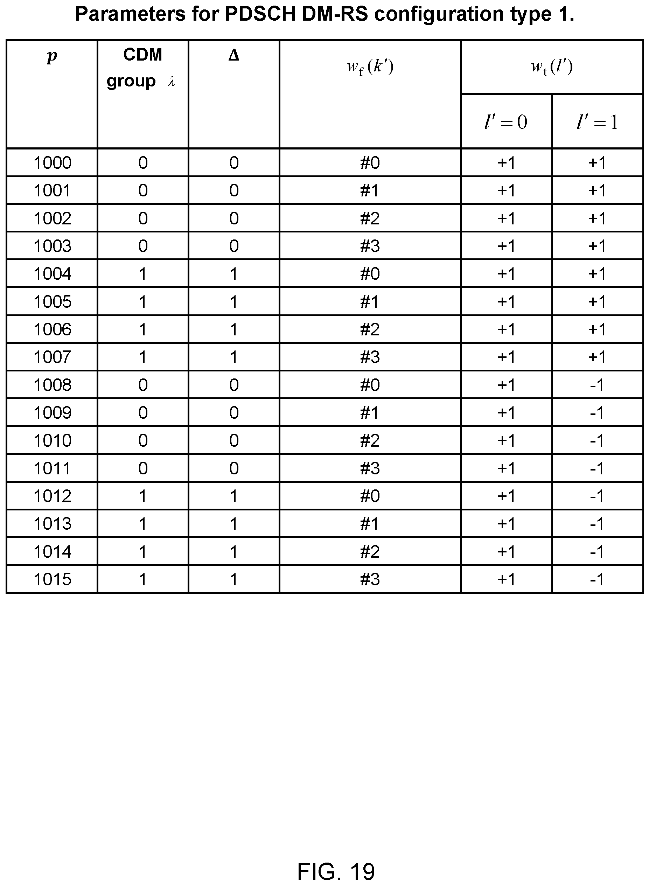

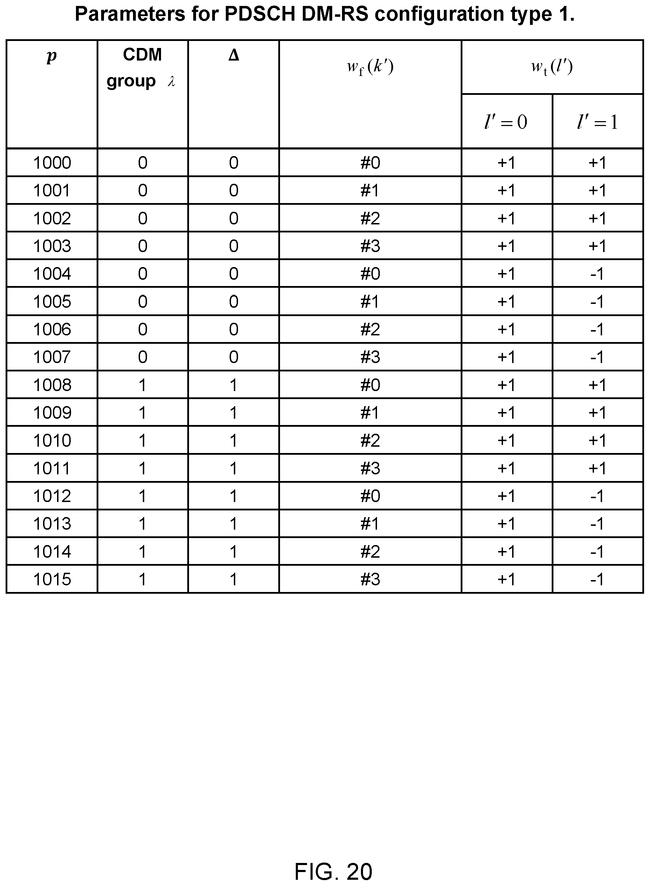

FIGS. 19 and 20 show examples of the table 2 for the DMRS configuration type 1. In this new DMRS port table, the entries corresponding to the DMRS port indices 1000 to 1003 and 1012 to 1015 are same as those in the existing DMRS port table, and the entries corresponding to the DMRS port indices 1004 to 1011 are different from those in the existing DMRS port table. In the new DMRS port table in FIG. 19, the TD OCC for the DMRS port indices 1004 to 1007 are same as the TD OCC for the DMRS port indices 1000 to 1003. The order of the entries in this new DMRS port table is TD OCC, CDM group, and FD OCC, similar to the order of the entries in the existing new DMRS port table. In the new DMRS port table in FIG. 20, the CDM group for the DMRS port indices 1004 to 1007 are same as the CDM group for the DMRS port indices 1000 to 1003. In this new DMRS port table, the entry for one CDM group is continuous.

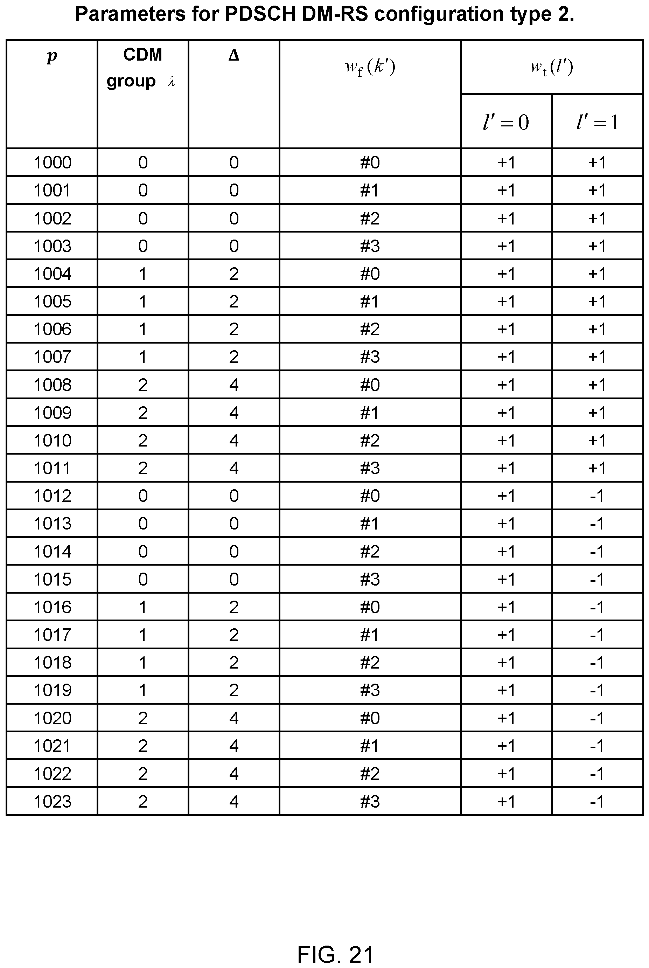

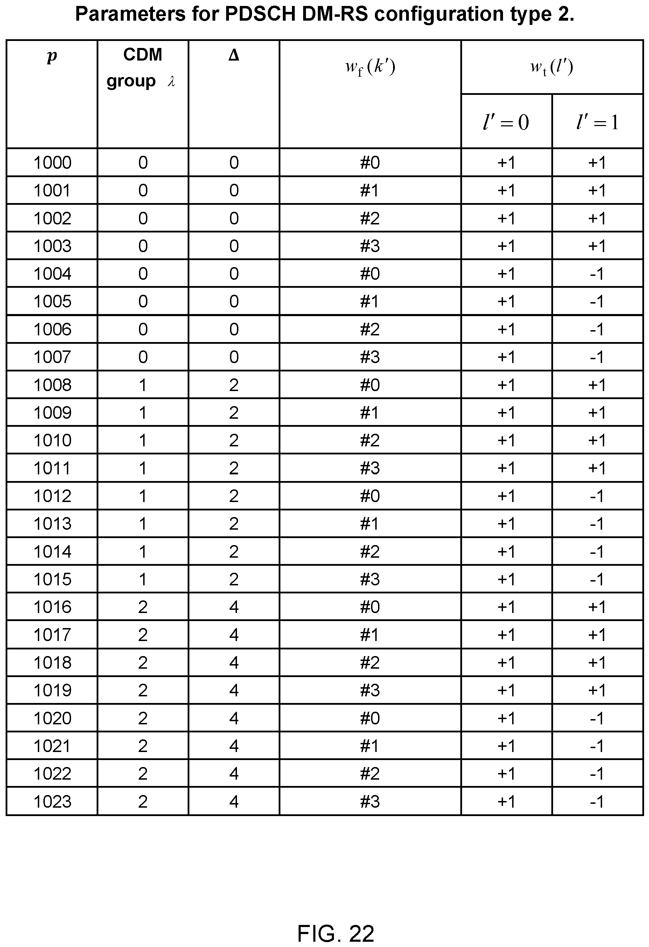

FIGS. 21 and 22 show examples of the table 2 for the DMRS configuration type 2. In this new DMRS port table, the entries corresponding to the DMRS port indices and 1000 to 1003 are same as those in the existing DMRS port table, and the entries corresponding to the DMRS port indices 1004 to 1023 are different from those in the existing DMRS port table. In the new DMRS port table in FIG. 21, the TD OCC for the DMRS port indices 1004 to 1011 are different from the TD OCC for the DMRS port indices 1000 to 1003. The order of the entries in this new DMRS port table is TD OCC, CDM group, and FD OCC, similar to the order of the entries in the existing new DMRS port table. In the new DMRS port table in FIG. 22, the CDM group for the DMRS port indices 1004 to 1011 are same as the CDM group for the DMRS port indices 1000 to 1003. In this new DMRS port table, the entry for one CDM group is continuous.

The FD OCC (w_f(k'), k' is 0 to 3) in the figure for embodiment #1-1 is shown in embodiment #1-2 below.

### <Embodiment #1-2>>

This embodiment relates to the FD OCC.

A new FD OCC (w_f(k'), k' is 0 to 3) may be defined.

An FD OCC having a length of 4 may be used for the DMRS configuration type 2. The FD OCC may comply with any of codes A-1 to A-3 below, or may be a sequence different for those.

### [Code A-1]

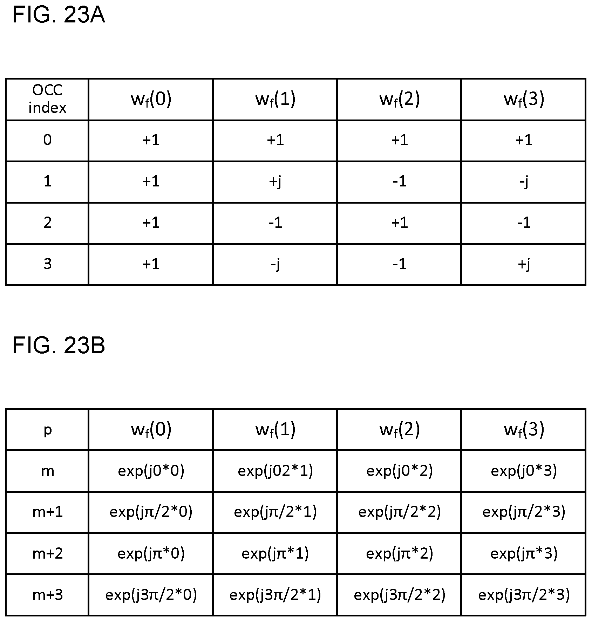

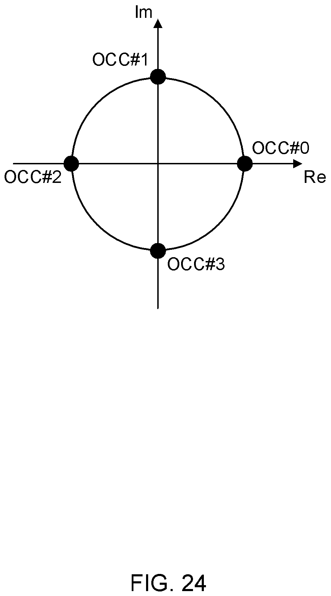

The FD OCC may be four complex sequences (FIG. 23A). As shown in FIG. 23B, the FD OCC w_f(k') corresponding to this k' = {0, 1, 2, 3} may be generated using cyclic shift α = {0, π/2, π, 3π/2}, respectively, for w_f(0) (FIG. 24). k' = {0, 1, 2, 3} may correspond to an equal interval cyclic shift (for example, α = {0, -π/2, -π, -3π/2}, α = {0, π, π/2, 3π/2}), or may correspond to an unequal interval cyclic shift (for example, α = {0, 2π/6, 2 * 2π/6, 3 * 2π/6}).

### [Code A-2]

The FD OCC may be four Walsh sequences (FIG. 23A). The FD OCC may be the same as for the TD OCC for CSI-RS.

### [Code A-3]

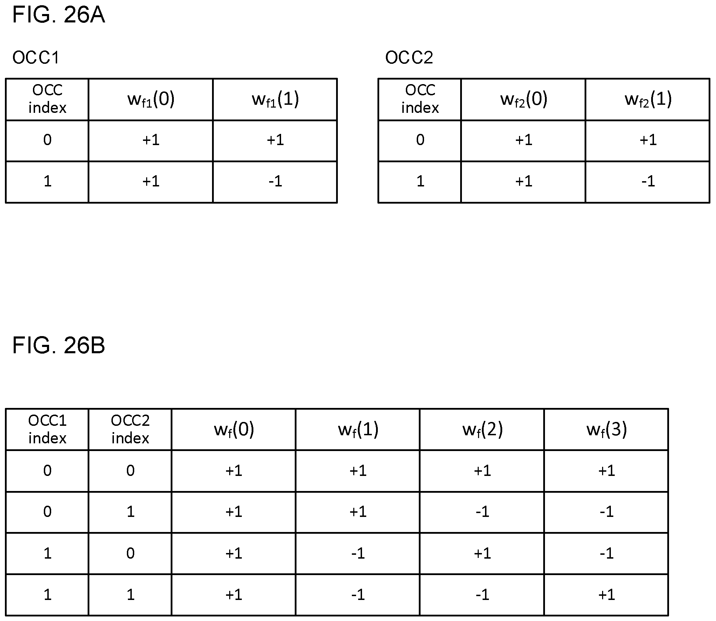

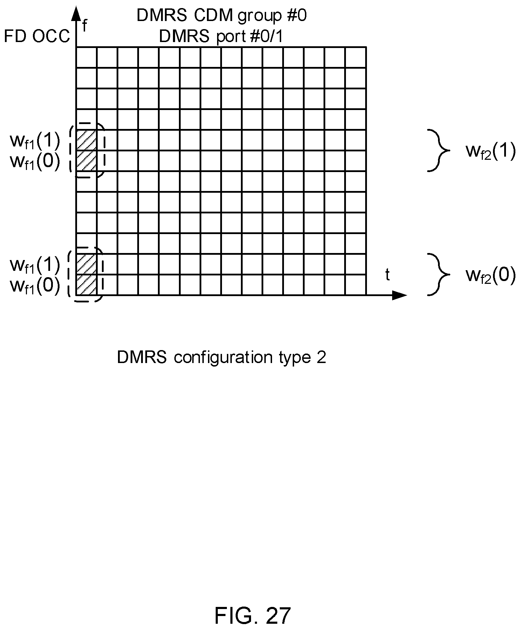

The FD OCC may be four sequences generated by multiplying two OCCs. For example, the FD OCC may be generated by multiplying (FIG. 26B) an OCC 1 and an OCC 2 (FIG. 26A). As in an example in FIG. 27, four subcarriers may be divided into two subcarrier groups with each two subcarriers being one subcarrier group, and the OCC 1 may be applied to two subcarriers in each subcarrier group and the OCC 2 may be applied to two subcarrier groups. Each of the OCC 1 and the OCC 2 may be an orthogonal sequence, and the FD OCC may be an orthogonal sequence.

An FD OCC having a length of 6 may be used for the DMRS configuration type 1. The FD OCC may comply with any of codes B-1 to B-3 below, or may be a sequence different for those.

### [Code B-1]

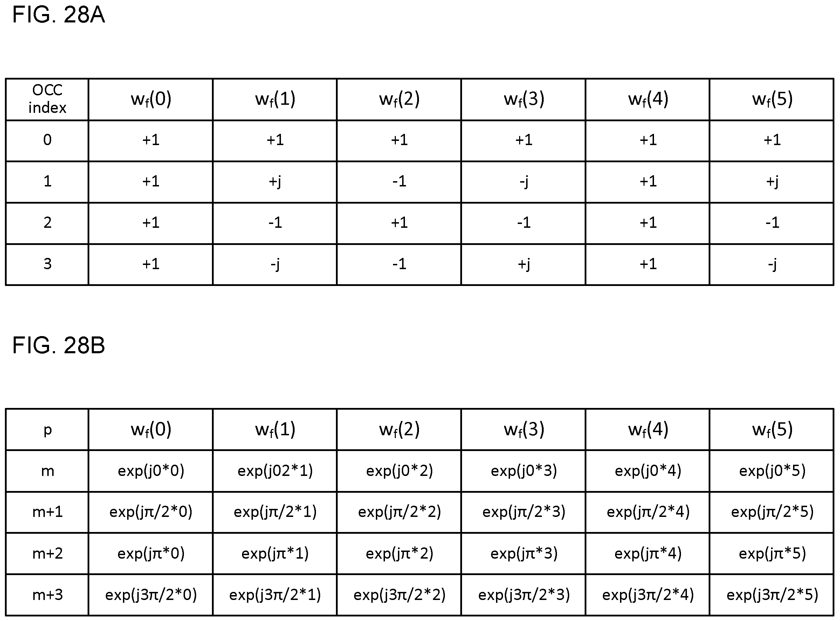

The FD OCC may be six complex sequences (FIG. 28A). As shown in FIG. 28B, the FD OCC w_f(k') corresponding to this k' = {0, 1, 2, 3, 4, 5} may be generated using cyclic shift α = {0, π/2, π, 3π/2, 2π, 5π/2}, respectively, for w_f(0). k' = {0, 1, 2, 3} may correspond to an equal interval cyclic shift (for example, α = {0, -π/2, -π, -3π/2, -2π, -5π/2}, α = {0, π, π/2, 3π/2, 0, π}), or may correspond to an unequal interval cyclic shift (for example,α = {0, 2π/6, 2 * 2π/6, 3 * 2π/6, 4 * 2π/6, 5 * 2π/6}).

### [Code B-2]

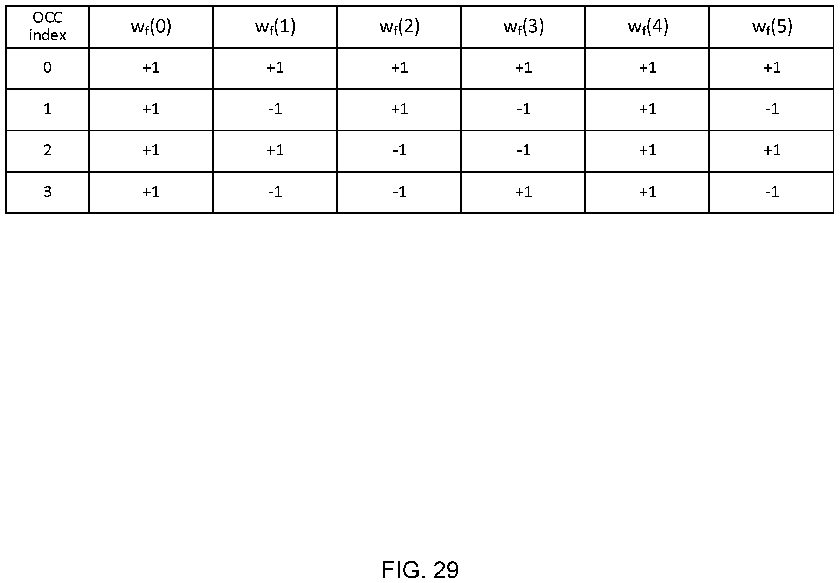

The FD OCC may be generated based on a Walsh sequence having a length of 4 (FIG. 29). w_f(k') corresponding to k' = {4, 5} may be w_f(k') corresponding to k' = {0, 1}.

### [Code B-3]

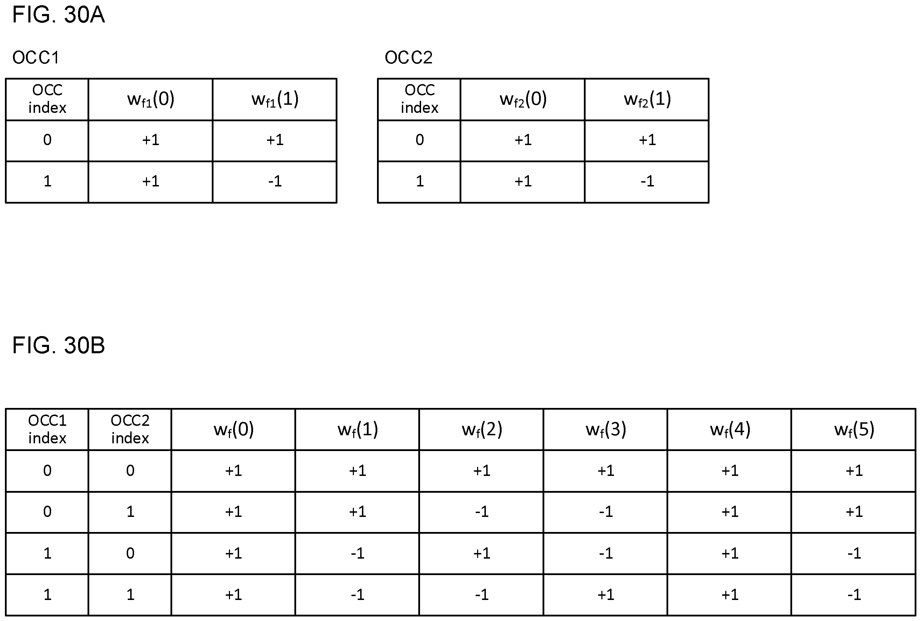

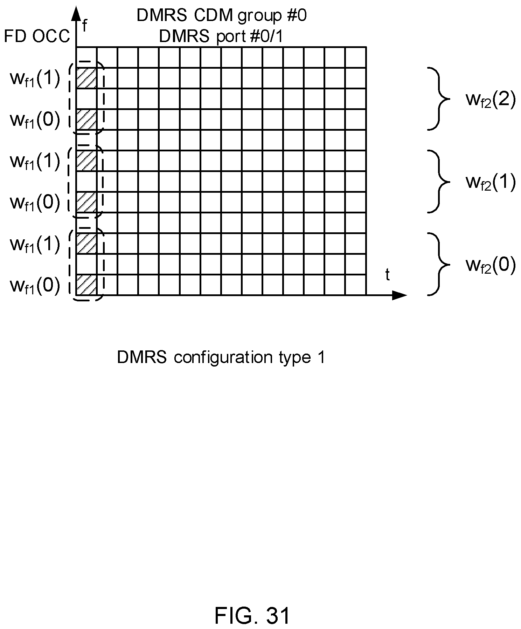

The FD OCC may be generated by multiplying two OCCs. For example, the FD OCC may be generated by multiplying (FIG. 30B) the OCC 1 and the OCC 2 (FIG. 30A). As in an example in FIG. 31, six subcarriers may be divided into three subcarrier groups with each two subcarriers being one subcarrier group, and the OCC 1 may be applied to two subcarriers in each subcarrier group and the OCC 2 may be applied to three subcarrier groups. At least one of the OCC 1 and the OCC 2 may be an orthogonal sequence. The OCC 2 may be generated using a cyclic shift for a sequence. The cyclic shift may be α = {0, π, 2π}, α = {0, 2π/3, 4π/3}, or the like.

According to this embodiment, a suitable FD OCC can be used for the DMRS. This allows the number of DMRS ports to be increased.

### <Embodiment #2>

This embodiment relates to the TD OCC in one slot/sub-slot/PDSCH/PUSCH.

A TD OCC in one PRB in one slot/sub-slot/PDSCH/PUSCH may be defined.

The TD OCC may be applied across two symbols or all the symbols in one slot. The TD OCC may be applied across the front-loaded DMRS and the additional DMRS. This TD OCC may be applied only in a case that the additional DMRS is configured. This TD OCC may be applied only in a case that the frequency hopping is not configured (or a case that the same frequency is used for the symbol of the TD OCC).

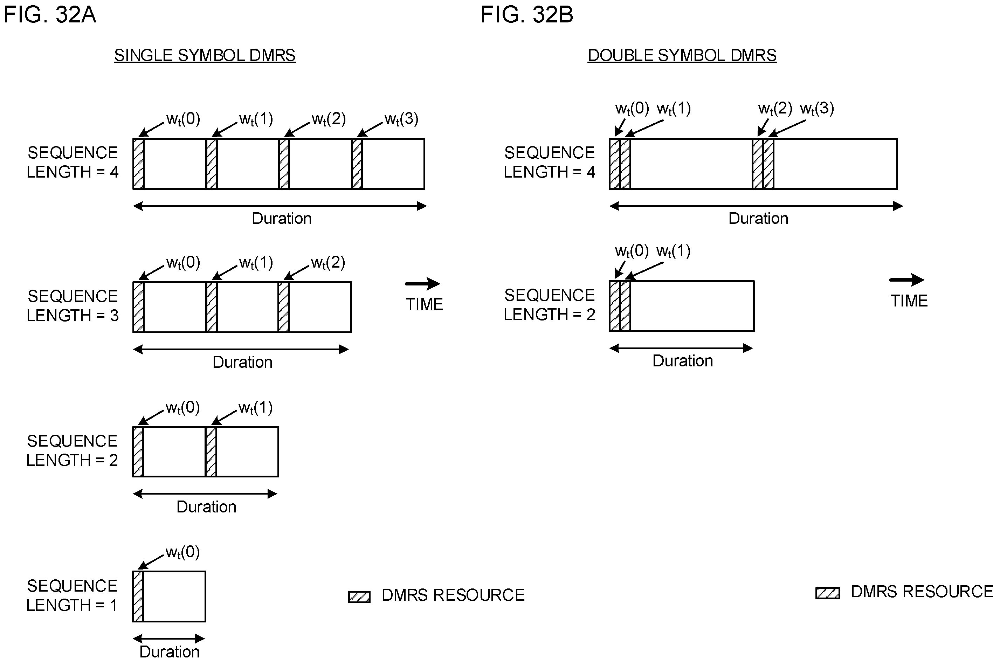

FIG. 32A shows an example of the TD OCC for the single symbol DMRS. In this example, the TD OCC is applied to one to four single symbol DMRSs in one slot.

FIG. 32B shows an example of the TD OCC for the double symbol DMRS. In this example, the TD OCC is applied to one to two double symbol DMRSs in one slot.

The TD OCC w_t(k), k = {0, 1} may be the same as the FD OCC w_f(k) having the length of 2 in embodiment #1.

According to this embodiment, a suitable TD OCC can be used for the DMRS. This allows the number of DMRS ports to be increased.

### <Embodiment #3>

This embodiment relates to the FD OCC across a plurality of PRBs.

An FD OCC across a plurality of PRBs in one slot/sub-slot/PDSCH/PUSCH may be defined.

The FD OCC may be applied across more than one PRB. The more than one PRB may be continuous PRBs.

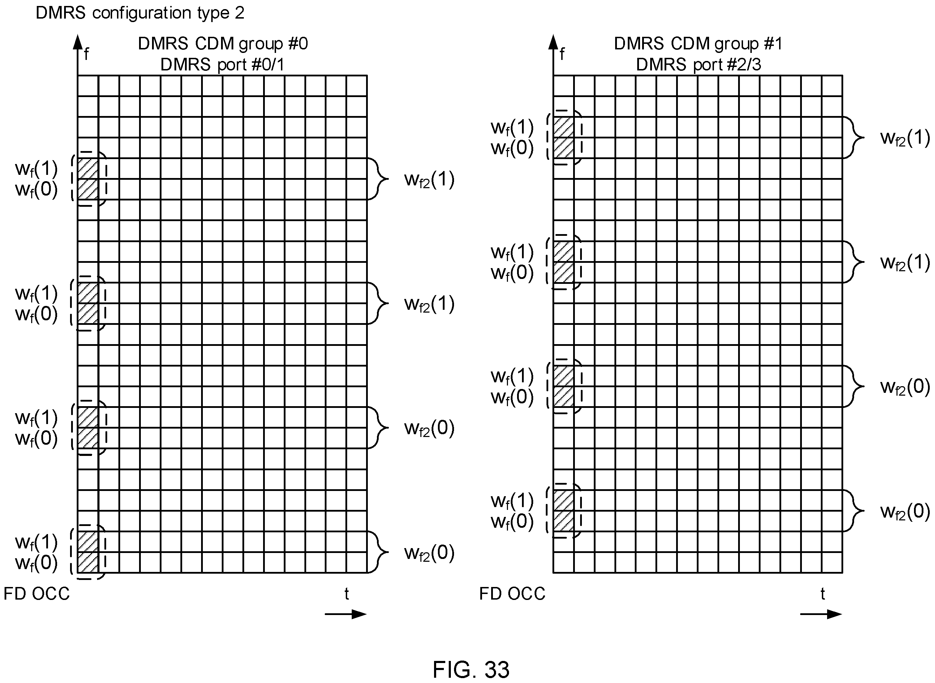

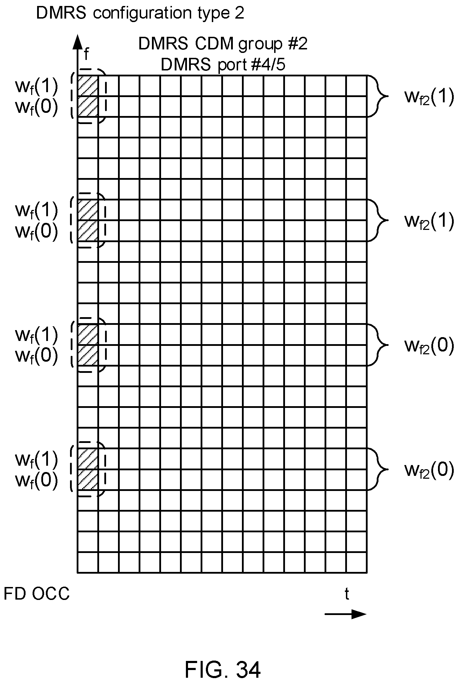

An FD OCC having a length of 2 may be applied. FIGS. 33 and 34 show examples of the FD OCC mapping for the DMRS configuration type 2 and the single symbol DMRS in embodiment #3. In this example, each subcarrier group includes four subcarriers, and an FD OCC having a length of 2 is applied to two discontinuous subcarrier groups in two continuous PRBs.

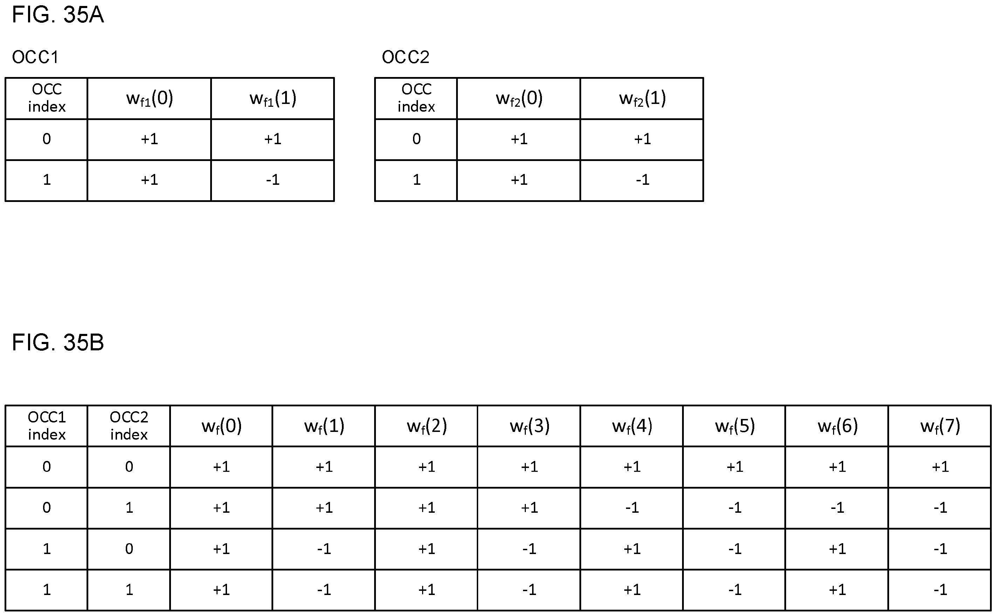

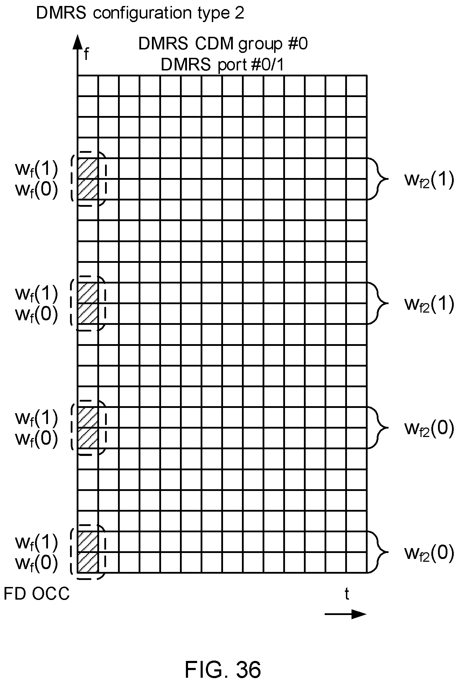

An FD OCC having a length of 8 obtained by multiplying an FD OCC having a length of 2 and an FD OCC having a length of 2 may be applied. Each of the OCC 1 and the OCC 2 has a length of 2 (FIG. 35A). The TD OCC having the length of 8 may be a sequence obtained by multiplying the OCC 1 and the OCC 2 (FIG. 35B), or may be a Walsh sequence having a length of 8. FIG. 36 shows another example of the FD OCC mapping for the DMRS configuration type 2 and the single symbol DMRS in embodiment #3. In this example, eight subcarriers are divided into two first groups, and then each first group includes four subcarriers. Each first group is divided into two second groups, and then each second group includes two subcarriers. The OCC 1 is applied to two subcarriers in each second group and the OCC 2 is applied to two first groups.

### [Variation]

A longer DMRS sequence and the number of more DMRS ports may be used.

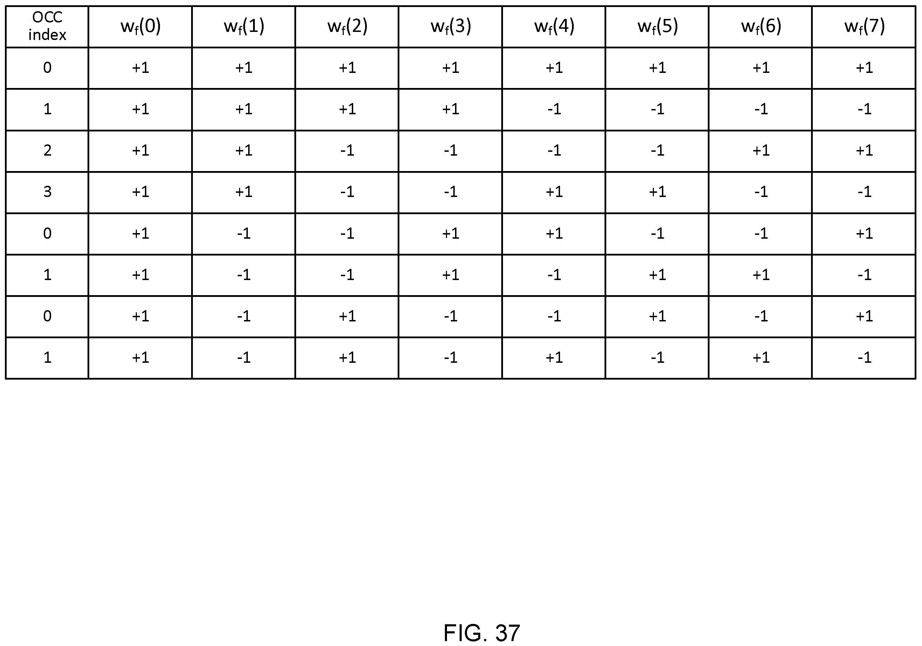

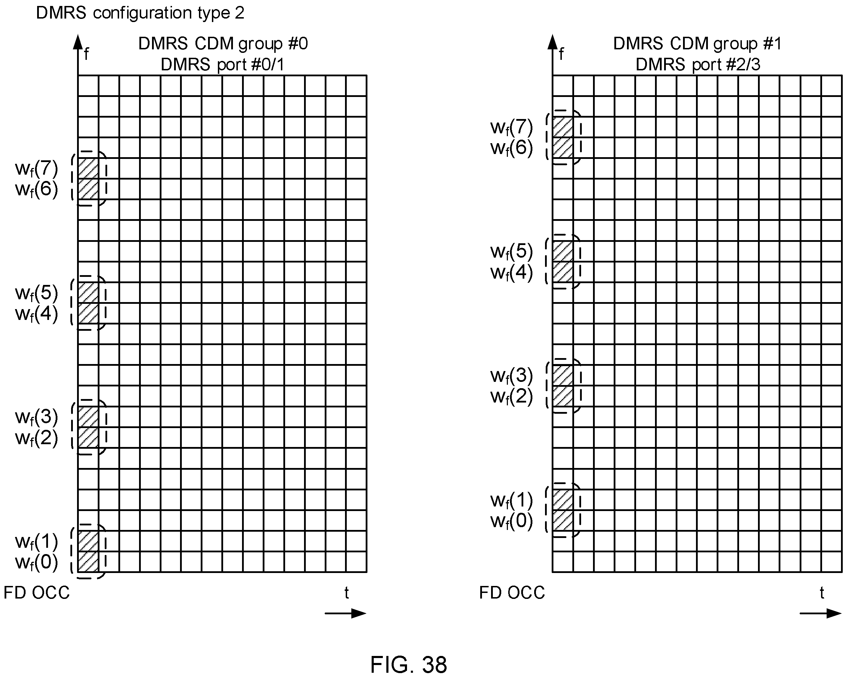

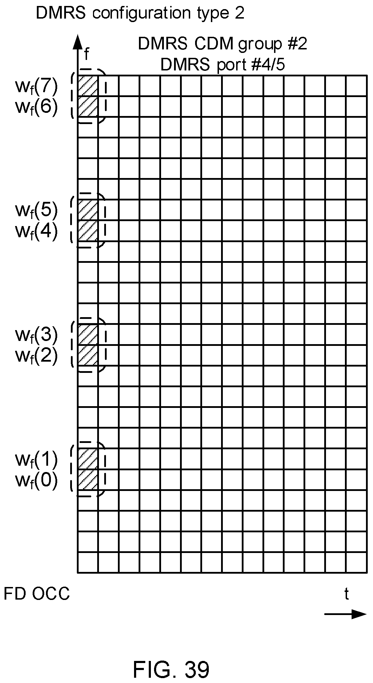

An FD OCC having a length of 8 may be applied (FIG. 37). The FD OCC may be based on a Walsh sequence having a length of 8. In this example, the FD OCC having the length of 8 is applied to eight subcarriers (FIGS. 38 and 39).

In a case that the example in the figure of this embodiment is applied to the double symbol DMRS, a TD OCC having a length of 2 may be further applied.

According to this embodiment, a suitable FD OCC can be used for the DMRS. This allows the number of DMRS ports to be increased.

### <Embodiment #4>

This embodiment relates to the TD OCC across a plurality of slots/sub-slots/PDSCHs/PUSCHs.

A TD OCC across a plurality of slots/sub-slots/PDSCHs/PUSCHs may be defined. The TD OCC may be applied across continuous or discontinuous two slots/sub-slots/PDSCHs/PUSCHs.

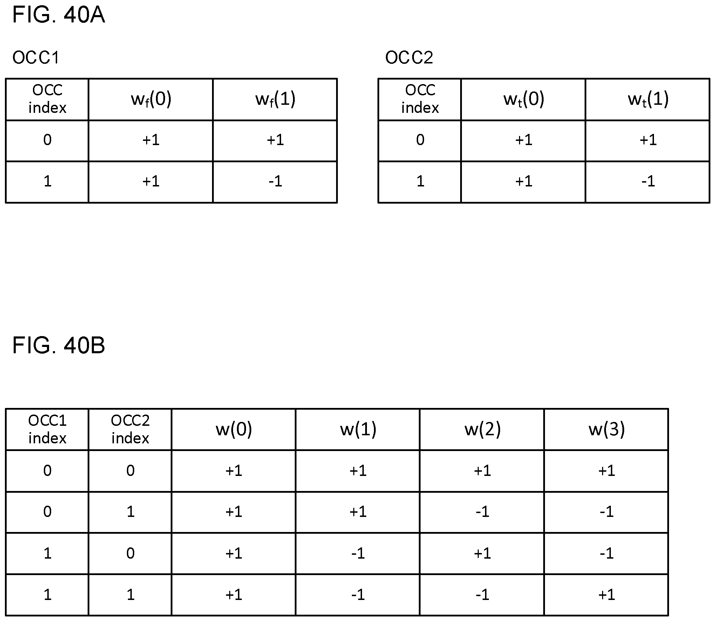

A TD OCC having a length of 4 (FIG. 40B) obtained by multiplying the OCC 1 having a length of 2 and the OCC 2 having a length of 2 (FIG. 40A) may be applied to a double symbol DMRS. The TD OCC may be a Walsh sequence having a length of 4.

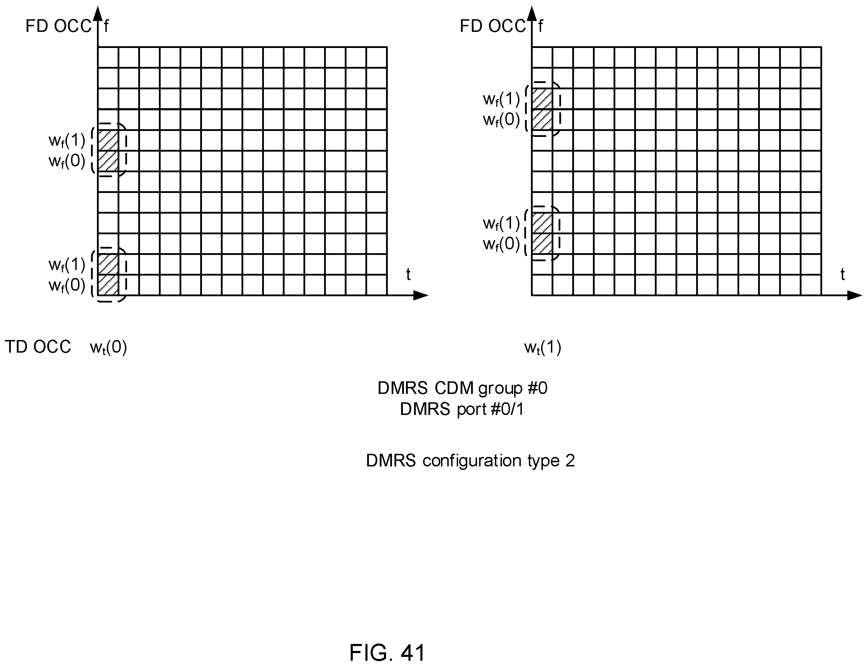

FIG. 41 shows an example of the TD OCC mapping for the DMRS configuration type 2 and the single symbol DMRS in embodiment #4. A TD OCC having a length of 2 is applied to two slots.

In a case that the joint channel estimation (coverage enhancement scheme) for a plurality of slots/sub-slots is configured, the TD OCC may be applied to the plurality of slots. In the case that the joint channel estimation (coverage enhancement scheme) for a plurality of slots/sub-slots is configured, phases of signals across the plurality of slots/sub-slots may be assumed to be continuous/coherent. The joint channel estimation being configured may be the DMRS bundling (for example, PUSCH-DMRS-Bundling for a PUSCH, PUCCH-DMRS-Bundling for a PUCCH) being configured.

A configured time domain window for UL/DL may be configured for the UE. For example, the configuration may include at least two of an index of a start slot/sub-slot, an index of an end slot/sub-slot, and a duration of the window. A TD OCC across a plurality of slots/sub-slots may be applied in the window.

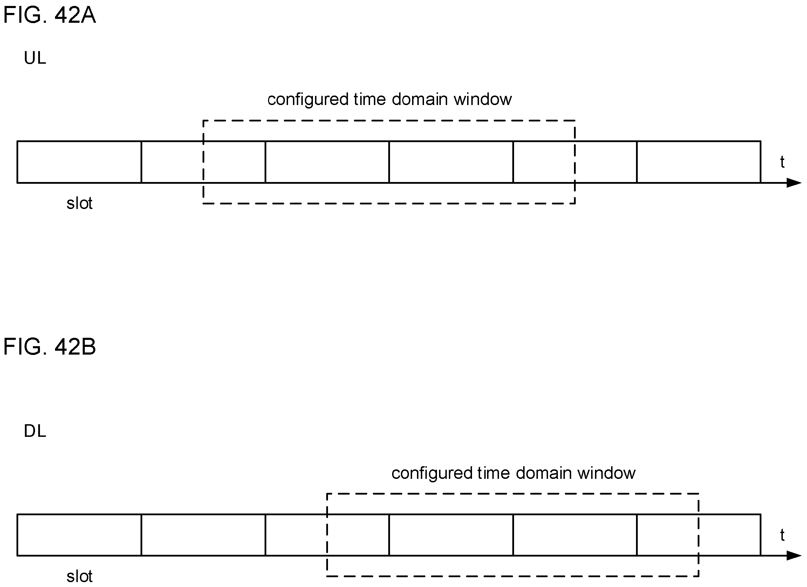

FIG. 42A shows an example of the configured time domain window for UL. The UE may assume to maintain (may maintain) power consistency and phase continuity during a transmission of a plurality of PUSCHs in the configured time domain window. FIG. 42B shows an example of the configured time domain window for DL. The UE may assume power consistency and phase continuity during a transmission of a plurality of PDSCHs in the configured time domain window.

According to this embodiment, a suitable TD OCC can be used for the DMRS. This allows the number of DMRS ports to be increased.

### <Comparison>

According to the FD OCC in one PRB in one slot/sub-slot/PDSCH/PUSCH in embodiment #1, a PDSCH/PUSCH in one PRB in one slot/sub-slot/PDSCH/PUSCH can be used. The above can be applied even in a case that there is no additional DMRS, or there is a frequency hopping.

According to the TD OCC in one PRB in one slot/sub-slot/PDSCH/PUSCH in embodiment #2, performance can be more expected for a low speed (low performance) UE.

According to the FD OCC across a plurality of PRBs in embodiment #3, the above can be applied even in the case that there is no additional DMRS, or there is a frequency hopping.

According to the TD OCC across a plurality of slots/sub-slots/PDSCHs/PUSCHs in embodiment #4, the good performance can be expected for a low speed (low performance) UE even in the case that there is no additional DMRS, or there is a frequency hopping.

### [Variation]

This embodiment relates to an RB level FDM.

An RB level FDM configuration may be defined for the DMRS configuration types 1/2. The RB level FDM configuration may be an RB level comb.

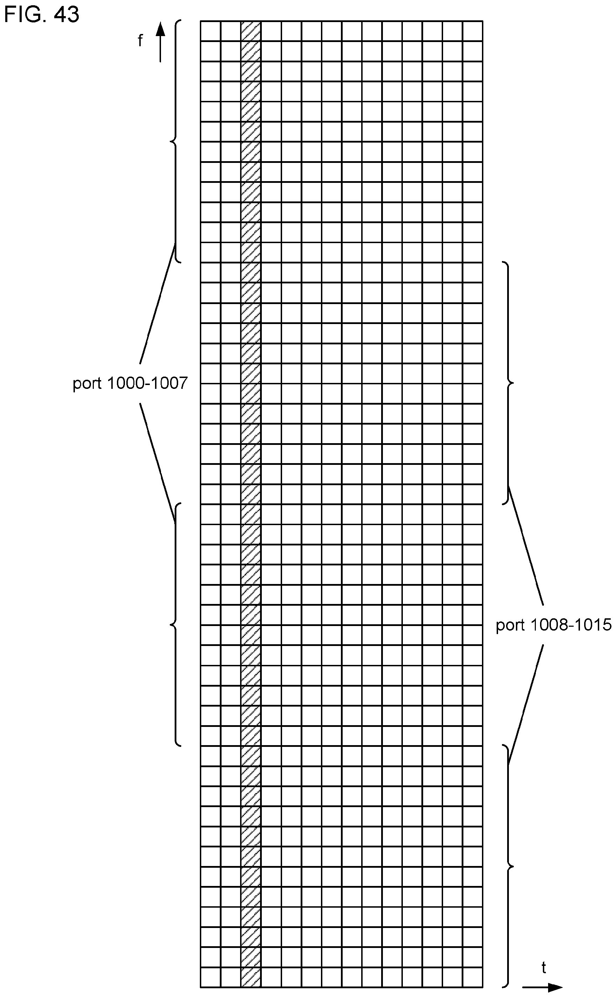

In an example in FIG. 43, an RB level comb 2 is applied to the single symbol DMRS of the DMRS configuration type 1. By the RB level comb 2, the ports 1000 to 1007 are mapped across PRBs of even number indices (#0, #2, ...), and the ports 1008 to 1015 mapped across PRBs of odd number indices (#1, #3, ...). With this configuration, the number of DMRS ports is eight. Alternatively, whether a PRB of an even number index or a PRB of an odd number index is mapped to the first DMRS port may be configured by the higher layer.

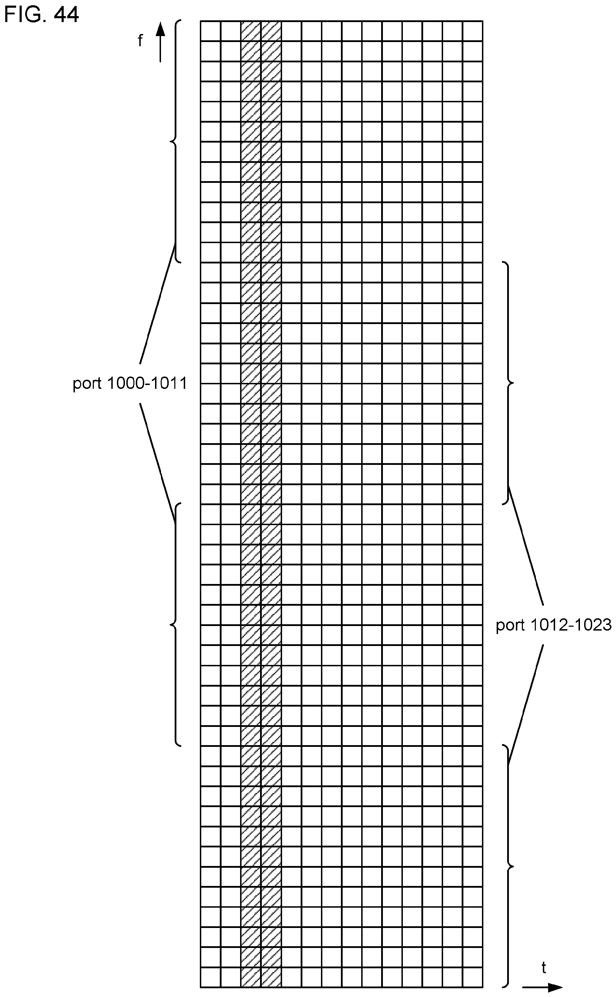

In an example in FIG. 44, the RB level comb 2 is applied to the double symbol DMRS of the DMRS configuration type 2. In this example, the ports 1000 to 1011 are mapped across PRBs of even number indices (#0, #2, ...), and the ports 1012 to 1023 are mapped across PRBs of odd number indices (#1, #3, ...). With this configuration, the number of DMRS ports is 24. Alternatively, whether a PRB of an even number index or a PRB of an odd number index is mapped to the first DMRS port may be configured by the higher layer.

According to this variation, the number of DMRS ports can be increased.

### <Embodiment #5>

This embodiment relates to multiplexing of a DMRS for a new UE and a DMRS for an existing UE.

The existing UE may be a Rel-15/16/17 UE. The new UE may be a UE using the number of DMRS ports more than the number of DMRS ports of the existing UE, a UE using the OCC/DMRS in the above-described embodiments/variations, or a UE in Rel. 18 or later versions.

It is preferable that MU-MIMO across the existing UE and the new UE is possible. It is important that the new OCC in the above-described embodiments and the existing OCC in Rel. 15 have the orthogonality.

The new OCC (OCC of the code A-1/A-2/A-3/B-1/B-2/B-3 describe above) can be orthogonal to the existing OCC. Even in a case that the existing OCC is a part of the new OCC, the new OCC can be orthogonal to the existing OCC. The new OCC may be longer than the existing OCC.

A part of the new OCC of the code B-3 (FIG. 30B) is the same as the existing OCC having the length of 2 (FIG. 30A). In this example, a part of w_f(0) and w_f(1), a part of w_f(2) and w_f(3), and a part of w_f(4) and w_f(5) in new OCC corresponding to the index of 0 of the OCC 2 are the same as the existing OCC. A part of the new OCC associated with a specific index may be the same as the existing OCC associated with the specific index.

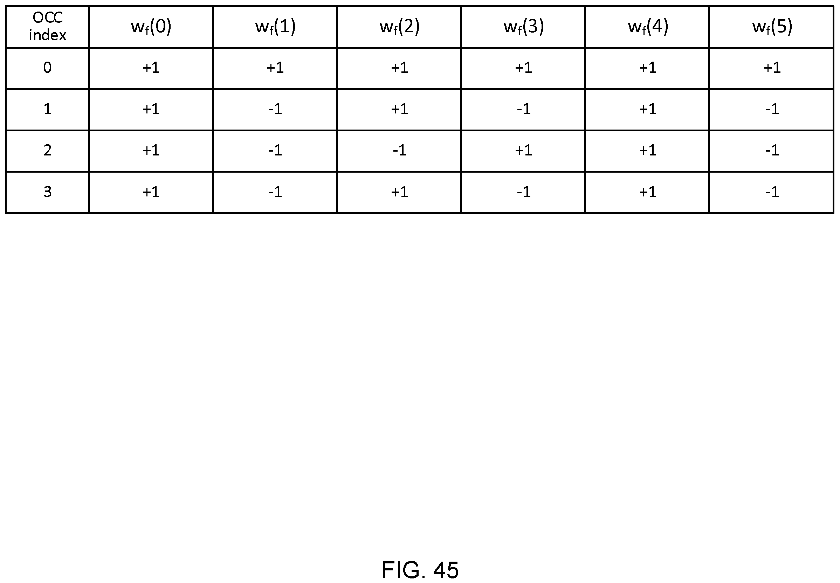

A new OCC mapping order may be changed so that the OCC is maintained for the same DMRS port. As in an example inf FIG. 45, a new OCC may be indexed in priority to a new OCC (code B-3) a part of which is the same as the existing OCC.

In order to maintain the orthogonality, a receiver (base station/UE) should know the length of the OCC. For example, in a case that an OCC having a length of 2 is applied, the receiver can decode the OCC by using two points (2 REs, points of a multiple of 2/RE) of a received signal. In a case that an OCC having a length of 4 is applied, the receiver should use four points (4 REs, points of a multiple of 4/RE) of a received signal to decode the OCC.

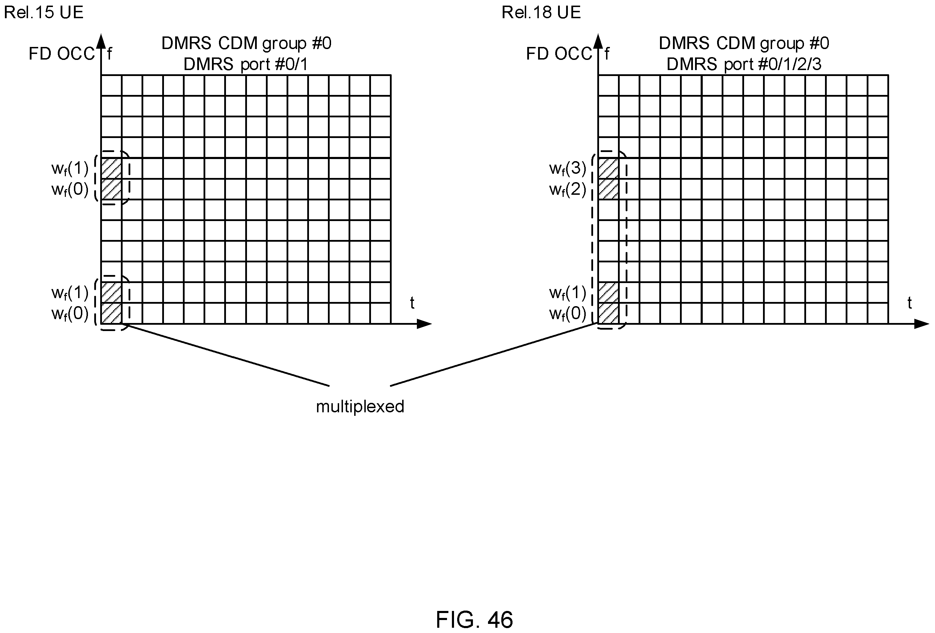

In an example in FIG. 46, a DMRS to which an existing FD OCC having a length of 2 is applied is transmitted in four REs and a DMRS to which a new FD OCC having a length of 4 is applied is transmitted in those four REs, and thereby, the DMRS for the existing UE and the DMRS for the new UE are multiplexed. In a case that the lengths of the all multiplexed OCCs are 2, the receiver uses the received signals of two REs to decode the OCCs. In this example, in order to maintain the orthogonality, the receiver uses the received signals of four REs to decode the OCCs.

The UE may use received signals on M REs to decode the OCC for a PDSCH DMRS. M represents a length of a new OCC. Information of the length of the OCC may be notified through higher layer signaling. The existing UE may always assume all signals/REs in one PRB. In this case, the existing UE can decode the new OCC in embodiment #1. The existing UE may not always assume all signals/REs in one PRB. In this case, the UE cannot decode the new OCC.

How to decode the OCC for a PUSCH DMRS may depend on the base implementation.

According to this embodiment, the DMRS for the existing UE and the DMRS for the new UE can be multiplexed. This allows resource use efficiency to be increased.

### <Other Embodiments>

### <<UE Capability Information/Higher Layer Parameter>>

The higher layer parameters (RRC IE)/UE capability corresponding to the functions (features) according to the embodiments described above may be defined. The higher layer parameter may indicate whether to enable the functions. The UE capability may indicate whether or not the UE supports the functions.

The UE configured with the higher layer parameter corresponding to the function may perform the function. It may be defined that "the UE not configured with the higher layer parameter corresponding to the function does not perform the function (for example, complying with Re. 15/16)".

The UE reporting/transmitting the UE capability indicating that the function is supported may perform the function. It may be defined that "the UE not reporting that the UE capability indicating that the function is supported does not perform the function (for example, complying with Re. 15/16)".

In a case that the UE reports/transmits the UE capability indicating that the function is supported and is configured with the higher layer parameter corresponding to the function, the UE may perform the function. It may be defined that "in a case that the UE does not report/transmit the UE capability indicating that the function is supported, or is not configured with the higher layer parameter corresponding to the function, the UE does not perform the function (for example, complying with Re. 15/16)".

Which embodiment/option/choice/function in the plurality of embodiments described above is used may be configured by the higher layer parameter, reported as the UE capability by the UE, defined in the specification, or determined depending on the reported UE capability and the configuration by the higher layer parameter.

The UE capability may indicate whether or not the UE supports at least one of the functions below.
- The number of DMRS ports more than the existing specification (Rel. 15/16).
- An FD OCC, a TD OCC. An FD OCC in one PRB in one slot/sub-slot/PDSCH/PUSCH. A TD OCC in one PRB in one slot/sub-slot/PDSCH/PUSCH. FD OCC across a plurality of PRBs. A TD OCC across a plurality of slots/sub-slots/PDSCHs/PUSCHs.
- The number of more DMRS ports for the DMRS configuration type 1 or 2, or both of them.
- The number of more DMRS ports for the DMRS mapping type A or B, or both of them.
- The number of more DMRS ports for the single symbol DMRS, or the single symbol DMRS and the double symbol DMRS. The number of more DMRS ports for the single symbol DMRS or the double symbol DMRS.

The UE capability may indicate at least one of the followings.
- The number of DMRS ports.

According to the UE capability/higher layer parameter described above, the UE can achieve the above functions while maintaining compatibility with the existing specifications.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

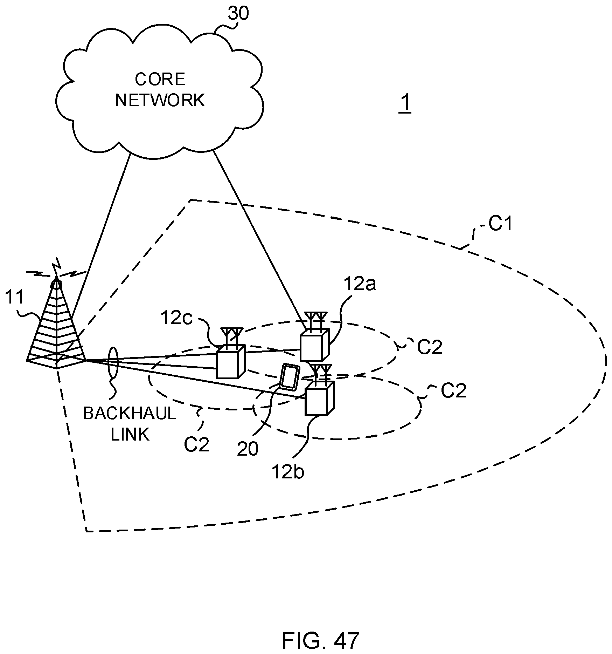

FIG. 47 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

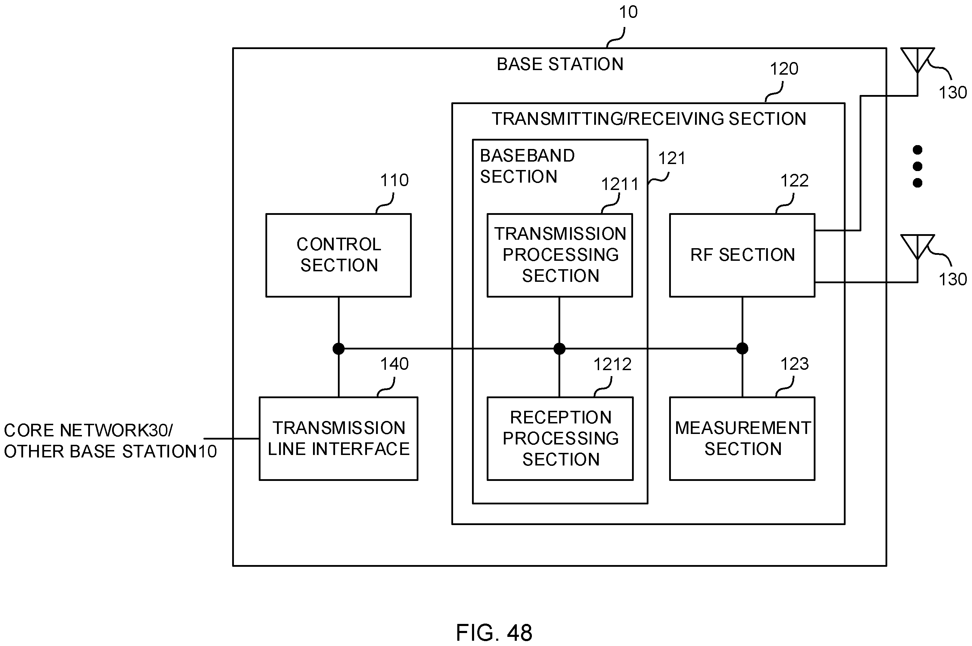

FIG. 48 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource assignment, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The control section 110 may perform at least one of a use of more than eight DMRS ports for the demodulation reference signal (DMRS) configuration type 1 and a use of more than 12 DMRS ports for the DMRS configuration type 2. The transmitting/receiving section 120 may transmit DMRSs and a physical downlink control channel using the DMRS ports.

The control section 110 may perform at least one of a use of more than eight DMRS ports for the demodulation reference signal (DMRS) configuration type 1 and a use of more than 12 DMRS ports for the DMRS configuration type 2. The transmitting/receiving section 120 may receive DMRSs and a physical uplink control channel using the DMRS ports.

The control section 110 may use a first orthogonal cover code for any one of not more than eight DMRS ports for the demodulation reference signal (DMRS) configuration type 1 and not more than 12 DMRS ports for the DMRS configuration type 2, and may use a second orthogonal cover code for any one of more than eight DMRS ports for the DMRS configuration type 1 and more than 12 DMRS ports for the DMRS configuration type 2. The transmitting/receiving section 120 may transmit or receive DMRSs using the DMRS ports.

### (User Terminal)

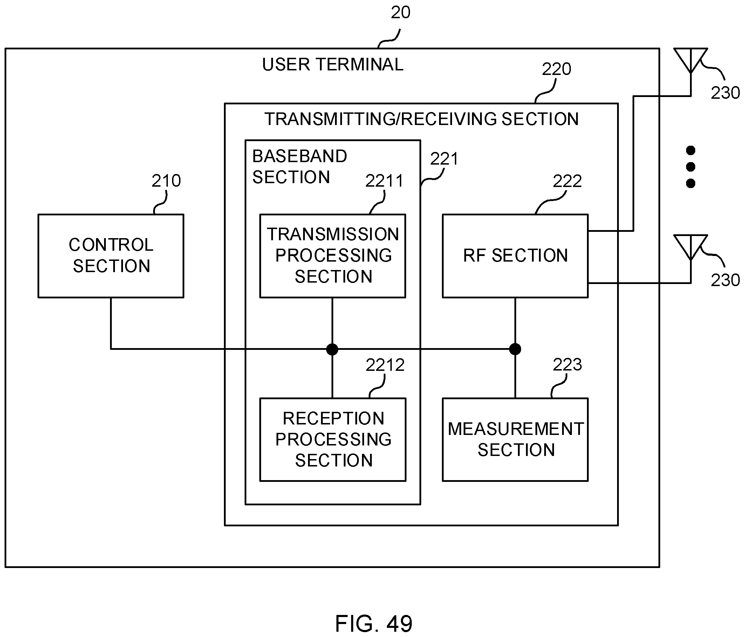

FIG. 49 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The control section 210 may perform at least one of a use of more than eight DMRS ports for the demodulation reference signal (DMRS) configuration type 1 and a use of more than 12 DMRS ports for the DMRS configuration type 2. The transmitting/receiving section 220 may receive DMRSs and a physical downlink control channel using the DMRS ports.

The control section 210 may apply a frequency domain orthogonal cover code to the DMRSs in more than two subcarriers in one or more resource blocks.

The control section 210 may apply a time domain orthogonal cover code to the DMRSs in more than two symbols in one or more time resources for any time resource of a slot, a sub-slot, and the physical downlink control channel.

The DMRS may have a comb structure in units of resource blocks.

The control section 210 may perform at least one of a use of more than eight DMRS ports for the demodulation reference signal (DMRS) configuration type 1 and a use of more than 12 DMRS ports for the DMRS configuration type 2. The transmitting/receiving section 220 may transmit DMRSs and a physical uplink control channel using the DMRS ports.

The control section 210 may apply a frequency domain orthogonal cover code to the DMRSs in more than two subcarriers in one or more resource blocks.

The control section 210 may apply a time domain orthogonal cover code to the DMRSs in more than two symbols in one or more time resources for any time resource of a slot, a sub-slot, and the physical downlink control channel.

The DMRS may have a comb structure in units of resource blocks.

The control section 210 may use the first orthogonal cover code for any one of not more than eight DMRS ports for the demodulation reference signal (DMRS) configuration type 1 and not more than 12 DMRS ports for the DMRS configuration type 2, and may use the second orthogonal cover code for any one of more than eight DMRS ports for the DMRS configuration type 1 and more than 12 DMRS ports for the DMRS configuration type 2. The transmitting/receiving section 220 may transmit or receive DMRSs using the DMRS ports.

The second orthogonal cover code may be longer than the first orthogonal cover code.

The control section 210 may be that a part of the second orthogonal cover code associated with a specific index may be the same as the first orthogonal cover code associated with the specific index.

The control section 210 may control reception of information of a length of the second orthogonal cover code.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

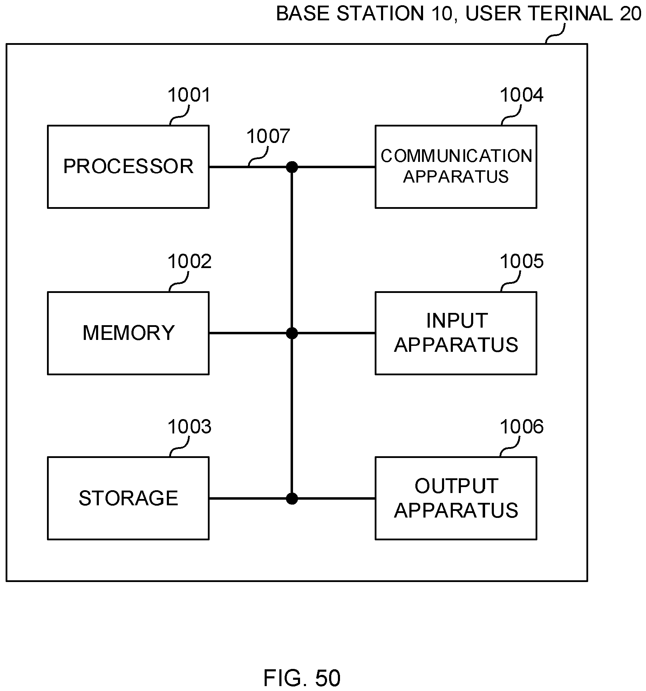

For example, a base station, a user terminal, and so on according to one embodiment of the present disclosure may function as a computer that performs the processes of the radio communication method of the present disclosure. FIG. 50 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and performs various processes according to these. As for the programs, programs to allow computers to perform at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object refers to a mobile object, of which moving speed is any speed, and also includes, as a matter of course, a case in which the moving object is stationary. For example, the moving object includes, but is not limited to, a vehicle, a transport vehicle, an automobile, a motorcycle, a bicycle, a connected car, an excavator, a bulldozer, a wheel loader, a dump truck, a forklift, a train, a bus, a handcart, a rickshaw, a ship and other watercraft, an airplane, a rocket, an artificial satellite, a drone, a multicopter, a quadcopter, a hot air balloon, and an object loaded on these. The moving object may be a moving object that autonomously moves based on an operation command.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

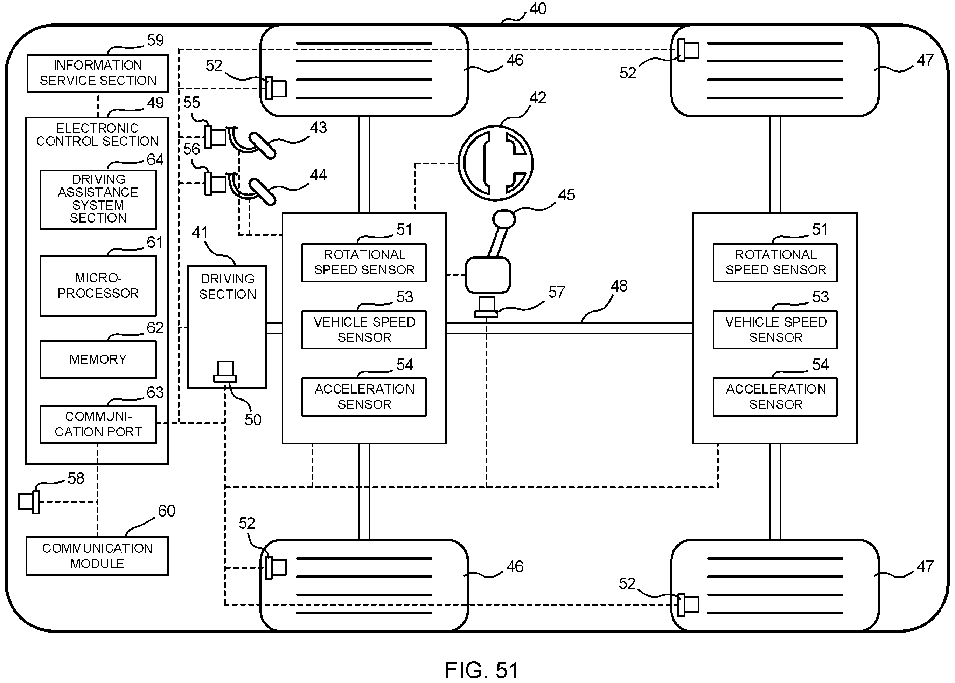

FIG. 51 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, am input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV)) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (x is, for example, an integer or a decimal), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, and next-generation systems that are enhanced, modified, created, or defined based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a control section that performs at least one of a use of more than eight DMRS ports for a demodulation reference signal (DMRS) configuration type 1 and a use of more than 12 DMRS ports for a DMRS configuration type 2; and
a receiving section that receives DMRSs for a physical downlink control channel using the DMRS ports.

2. The terminal according to claim 1, wherein
the control section applies a frequency domain orthogonal cover code to the DMRSs in more than two subcarriers in one or more resource blocks.

3. The terminal according to claim 1 or 2, wherein
the control section applies a time domain orthogonal cover code to the DMRSs in more than two symbols in one or more time resources for any time resource of a slot, a sub-slot, and the physical downlink control channel.

4. The terminal according to any one of 1 to 3, wherein
the DMRS has a comb structure in units of resource blocks.

5. A radio communication method for a terminal, the radio communication method comprising:
performing at least one of a use of more than eight DMRS ports for a demodulation reference signal (DMRS) configuration type 1 and a use of more than 12 DMRS ports for a DMRS configuration type 2; and
receiving DMRSs for a physical downlink control channel using the DMRS ports.

6. A base station comprising:
a control section that performs at least one of a use of more than eight DMRS ports for a demodulation reference signal (DMRS) configuration type 1 and a use of more than 12 DMRS ports for a DMRS configuration type 2; and
a transmitting section that transmits DMRSs for a physical downlink control channel using the DMRS ports.
